# EUROPÄISCHE PATENTSCHRIFT

(11) **EP 2 788 296 B1**
(45) Veröffentlichungstag und Bekanntmachung des Hinweises auf die Patenterteilung: **02.11.2016**
(21) Anmeldenummer: 12805651.2
(22) Anmeldetag: 06.12.2012
(51) Int. Cl.: C03C 4/14, C09D 5/08, C09D 5/24, H01B 1/14, H01B 1/16, H01B 1/18, H01M 4/00

(54) **ELEKTRONISCH LEITFÄHIGE EMAIL-ZUSAMMENSETZUNG**
ELECTRONICALLY CONDUCTIVE ENAMEL COMPOSITION
COMPOSITION D'ÉMAIL ÉLECTRONIQUEMENT CONDUCTRICE

(30) Priorität: 06.12.2011 DE 102011087818; 01.06.2012 DE 102012209331
(43) Veröffentlichungstag der Anmeldung: 15.10.2014
(73) Patentinhaber: DBFZ Deutsches Biomasseforschungszentrum Gemeinnützige GmbH, 04347 Leipzig (DE)
(72) Erfinder: KOCH, Christian, 06844 Dessau-Roßlau (DE); DRÖßIGER, Martin, 04299 Leipzig (DE)
(74) Vertreter: Eisenführ Speiser
(86) Internationale Anmeldenummer: PCT/EP2012/074615
(87) Internationale Veröffentlichungsnummer: WO 2013/083680

(56) Entgegenhaltungen:
- WO-A1-2010/098297
- US-A1- 2004 084 659
- DATABASE WPI Week 200027 Thomson Scientific, London, GB; AN 2000-309398 XP002698171, & JP 2000 090733 A (MURATA MFG CO LTD) 31. März 2000 (2000-03-31)
- ALAN RAWLE: 'BASIC PRINCIPLES OF PARTICLE SIZE ANALYSIS', [Online] 01 Januar 2008, XP055009141 Gefunden im Internet: <URL:http://www.rci.rutgers.edu/~moghe/PSD Basics.pdf> [gefunden am 2011-10-11]

## Beschreibung

Die vorliegende Erfindung betrifft eine elektronisch leitfähige Email-Zusammensetzung, insbesondere für Korrosionsschutzbeschichtungen.

Beschichtungen aus Email werden insbesondere zum Schutz von Oberflächen gegen atmosphärische und chemische Einwirkungen (z. B. durch starke Säuren, verdünnte Laugen usw.) verwendet, besonders bei höherer Temperaturbelastung. Beschichtungen aus Email eignen sich zum Schutz von Oberflächen aus metallischen Werkstoffen, wie beispielsweise Gusseisen, Stahl oder Aluminium. Typische Anwendungsgebiete sind Auskleidungen von Kesseln, Apparaten und Reaktoren, Rohrleitungen und Einbauteile, Behälter, insbesondere zur Aufbewahrung korrosiver Medien, und Wannen.

Email ist eine durch Schmelzen geeigneter Rohstoffe (siehe unten) und Fritten (Abschrecken) entstandene, vorzugsweise glasig erstarrte Masse mit anorganischer, im wesentlichen oxidischer Zusammensetzung, die in einer oder mehreren Schichten auf ein Werkstück, beispielsweise aus Metall, aufgeschmolzen ist.

Die Herstellung von Email umfasst zwei separate thermische Prozessstufen, nämlich das Herstellen einer Glasschmelze und das Aufschmelzen (Aufbrennen) einer durch Abschrecken der Glasschmelze (Fritten) gebildeten Masse auf das zu beschichtende Werkstück, dieser Schritt wird auch als Emaillieren bezeichnet. Der zweistufige thermische Vorgang senkt die für das Wiederaufschmelzen notwendige Temperatur um mehrere hundert Grad ab und vermindert dadurch die thermische Belastung des zu beschichtenden Werkstücks.

In der ersten Prozessstufe wird eine Mischung umfassend Rohstoffe für die Glasherstellung wie Quarz, Feldspat, Soda, Pottasche, Borax, Natriumnitrat und/oder Flussspat und optionale Zusätze (Haftoxide, Trübungsmittel, Pigmente) bei ca. 1200 °C geschmolzen und dann gefrittet (in Wasser abgelassen bzw. abgeschreckt). Die so erhaltene Fritte wird fein vermahlen, gegebenenfalls mit Zusätzen wie z. B. Farbkörpern gemischt und als wässrige Suspension (Schlicker) oder als feines Pulver auf die vorbehandelte (gereinigte und gegebenenfalls aufgeraute) Werkstückoberfläche aufgetragen und dort nochmals aufgeschmolzen. Die Wiederaufschmelz- oder Aufbrenntemperatur von Email liegt im Bereich von 600 °C bis 900 °C, und ist abhängig vom Substratwerkstoff, von der Zusammensetzung des aufzubrennenden Materials und der Brenndauer.

Email enthält als glasbildende Oxide (Netzwerkbildner) Siliciumdioxid und Bortrioxid. Um die Wiederaufschmelz- bzw. Aufbrenntemperatur des Emails möglichst niedrig zu halten und den thermischen Ausdehnungskoeffizienten zu erhöhen, werden als Netzwerkwandler Natriumoxid und Kaliumoxid zugegeben; außerdem zur Einstellung der chemischen Beständigkeit und des Entglasungsverhaltens Aluminiumoxid.

Die Fritte kann auf ein Werkstück ein- oder mehrschichtig aufgebracht werden. Bei mehrschichtigem Auftrag wird zwischen Grundemail und Deckemail unterschieden. Das Grundemail hat vor allem die Aufgabe der Haftvermittlung. Außerdem muss es die Unterschiede des thermischen Ausdehnungskoeffizienten zwischen Substrat und Deckemail ausgleichen. Insbesondere für die Emaillierung von Gusseisen oder Stahl enthält das Grundemail die Haftoxide des Cobalts und/oder Nickels, diese werden bei der Herstellung der Fritte zur Glasschmelze zugegeben. Da das Grundemail häufig eine unregelmäßig gefärbte, manchmal blasige und üblicherweise nicht glatte Oberfläche zeigt, wird anschließend noch eine Deckemaillierung durchgeführt. Dazu werden in die Fritte für das Deckemail färbende Schwermetalloxide eingeschmolzen oder bei der Vermahlung der Fritte Farbkörper, z. B. in Form von Cobalt-, Eisen-, Mangan-, Chrom- oder Kupferoxid zugesetzt. Je nach gewünschtem optischem Effekt enthält das Deckemail farbgebende Zusätze und/oder Trübungsmittel.

Nachfolgend wird das durch Aufschmelzen (Aufbrennen) der Fritte (einschließlich der oben genannten Zusätze wie Haftoxide, Trübungsmittel, keramische Pigmente und farbgebende Oxide) auf der Oberfläche des zu beschichtenden Werkstücks (Substrat) gebildete Material als Email-Matrix bezeichnet.

Die Fritte einschließlich der oben genannten Zusätze wie Haftoxide, Trübungsmittel, keramischen Pigmente und farbgebende Oxide, die auf das zu emaillierende Werkstück aufgetragen wird, wird nachstehend auch als "Rohstoffe zur Bildung einer Email-Matrix" bzw. Email-Rohstoffe bezeichnet.

Die Email-Matrix ist aufgrund ihrer oben beschriebenen Zusammensetzung ein elektrischer Isolator, der bis zu einer bestimmten elektrischen Potentialdifferenz (abhängig von der Schichtdicke) bzw. einer bestimmten elektrischen Feldstärke keine Ladungsträger transportiert. Wenn in einem mit einer Email-Beschichtung versehenen Apparat oder Behälter aus einem metallischen, also elektronisch leitenden, Werkstoff nicht leitende Fluide oder bestimmte Feststoffe verarbeitet werden, kann sich durch Reibung eine elektrostatische Aufladung ausbilden. Wird durch diese elektrostatische Aufladung die kritische elektrische Feldstärke erreicht, erfolgt ein unerwünschter Durchschlag der Emailschicht, bei dem die Ladungsträger schlagartig durch die gebildete Schadstelle abtransportiert werden. Bei einem solchen unerwünschten Durchschlag erfährt die Emailschicht einen punktuellen, irreversiblen Schaden. Durch die Schadstelle versagt einerseits die elektrische Isolationswirkung der Emailschicht, denn die Entladung erfolgt nun punktuell weiter durch die Schadstelle, und andererseits versagt die Korrosionsschutzwirkung der Emailschicht, denn im Bereich der Schadstelle ist das zu schützende Material punktuell dem korrosiven Medium ausgesetzt, so dass Lochfraßkorrosion einsetzt.

Daher besteht ein Bedarf, Email-Beschichtungen so auszubilden, dass eine elektrostatische Aufladung abgeleitet werden kann. Dazu wurde unter anderem vorgeschlagen, in die Email-Matrix Edelmetallpartikel oder Edelmetallkolloide einzubetten. Derartige durch Einbettung von Edelmetallpartikeln oder Edelmetallkolloiden modifizierte Emailschichten werden auch für Anwendungen in der Medizintechnik und Biotechnologie genutzt, wobei es sich bei den in die Email-Matrix eingebetteten Edelmetallpartikeln oder Edelmetallkolloiden um Silberpartikel handelt, die eine antimikrobielle Wirkung ausüben. Der Einsatz von Edelmetallen ist jedoch aufgrund der hohen Materialkosten nachteilig. Außerdem besteht bei Edelmetall-Kolloiden und -partikeln die Gefahr des Herauswaschens aus der Email-Matrix, so dass die elektronische Leitfähigkeit nicht dauerhaft gewährleistet ist.

Alternativ wurde vorgeschlagen, in eine Emailschicht eine Zwischenschicht enthaltend leitfähige nanoskalige Partikel einzubringen. Hierbei wird ein einem Kondensator ähnlicher Schichtaufbau angestrebt, bei dem die Abführung der Ladungsträger aus der Zwischenschicht punktuell erfolgt und die Ladungsträger durch eine dünne, isolierende Emailschicht transportiert werden müssen. Dieser Aufbau schützt die Emailschicht jedoch nicht vor Durchschlagschäden und begrenzt durch die obere isolierende Emailschicht die maximal mögliche elektrische Feldstärke. Eigene Versuche mit einem solchen Aufbau haben gezeigt, dass die maximal mögliche Feldstärke für bestimmte Anwendungen, z. B. Niederschlagselektroden von Elektroabscheidern (Elektrofiltern) nicht ausreichend ist.

US 2011/0303883 offenbart eine Glaszusammensetzung für die Elektrodenherstellung umfassend 60-90 Gew.-% Bi₂O₃, 2-25 Gew.-% B₂O₃, 0-25 Gew.-% ZnO, 0.01-20 Gew.-% MgO+CaO+SrO+BaO und 0-25 Gew.-% SiO₂.

JP 2000-090733 offenbart eine leitfähige Paste aus Aluminiumpulver und einer Glasfritte aus 30-70 mol% Bi₂O₃, 20-60 mol% B₂O₃ und 10-50 mol% SiO₂.

US 2004/0084659 offenbart ein halbleitendes Glasurprodukt.

Die Aufgabe der vorliegenden Erfindung besteht daher darin, eine elektronisch leitfähige Email-Zusammensetzung, insbesondere für Korrosionsschutzbeschichtungen, bereitzustellen, welche die oben beschriebenen Nachteile des Standes der Technik nicht aufweist. Die erfindungsgemäße Email-Zusammensetzung ist u.a. geeignet für die Beschichtung von Reaktoren und Behältern der chemischen Industrie.

Die erfindungsgemäße Email-Zusammensetzung ist vorzugsweise geeignet für die Beschichtung der Niederschlagselektrode eines Elektroabscheiders (Elektrofilter). Hier sind die Anforderungen an die Durchschlagsbeständigkeit der Email-Schicht besonders hoch, da hier durch eine aktive Spannungsquelle in dem mit der Emailschicht in Berührung kommenden Medium hohe Konzentrationen an Ladungsträgern erzeugt werden, d. h. es wirkt ein konstantes sehr hohes externes elektrisches Spannungspotential von außen auf die Oberfläche des Emailkörpers.

Diese Aufgabe wird erfindungsgemäß gelöst durch eine elektronisch leitfähige Email-Zusammensetzung bestehend aus oder umfassend
(i) eine bei einer Temperatur im Bereich von 600 °C bis 900 °C schmelzende Email-Matrix
   und
(ii) in die Email-Matrix eingebettete Partikel eines oder mehrerer elektronisch leitfähiger Materialien, die keine Edelmetalle sind, wobei die Partikel (ii)
   - eine Partikelgröße von 700 µm oder kleiner, bevorzugt 300 µm oder kleiner, weiter bevorzugt 150 µm oder kleiner, noch weiter bevorzugt 100 µm oder kleiner, besonders bevorzugt 38 µm oder kleiner aufweisen, erhältlich durch Sieben,
   - und ausgewählt sind aus der Gruppe bestehend aus
      (a) Partikeln auf Kohlenstoff basierender elektronisch leitfähiger Materialien,
      (b) Partikeln sonstiger elektronisch leitfähiger Materialien ausgewählt aus der Gruppe der metallischen elektronisch leitfähigen Materialien, die keine Edelmetalle sind,
      (c) Partikeln, die aus einer Kombination auf Kohlenstoff basierender elektronisch leitfähiger Materialien und sonstiger elektronisch leitfähiger Materialien ausgewählt aus der Gruppe der metallischen elektronisch leitfähigen Materialien, die keine Edelmetalle sind, gebildet sind;
      und die Gesamtkonzentration der Partikel (ii) im Bereich von 0,09 Vol.-% bis 67,8 Vol.-%, bevorzugt im Bereich von 0,18 Vol.-% bis 67,8 Vol.-%, weiter bevorzugt im Bereich von 1,9 Vol.-% bis 55,2 Vol.-%, besonders bevorzugt im Bereich von 3,0 Vol.-% bis 44,2 Vol.-% liegt, bezogen auf die Summe der Volumina der Email-Matrix (i) und der Partikel (ii), wobei die Gesamtkonzentration an Partikeln (a) auf Kohlenstoff basierender elektronisch leitfähiger Materialien 48 Vol.-% oder weniger beträgt bezogen auf die Summe der Volumina der Email-Matrix (i) und der Partikel (a).

Dabei gilt bevorzugt, dass die Dichte der Email-Matrix im Bereich von 1,5 g/cm³ bis ca. 2,9 g/cm³, bevorzugt 2 g/cm³ bis 2,5 g/cm³ liegt, die Dichte der Partikel (b) bzw. (c) im Bereich von 5,5 bis 8,5 g/cm³, bevorzugt 6 bis 7,5 g/cm³ und die Dichte der Partikel (a) im Bereich von 2,1 g/cm³ bis 2,3 g/cm³. Somit liegt in einer bevorzugten Ausführungsform der Erfindung die Gesamtkonzentration der Partikel (ii) im Bereich von 0,5 Gew.-% bis 80 Gew.-%, bevorzugt im Bereich von 1 Gew.-% bis 80 Gew.-%, weiter bevorzugt im Bereich von 10 Gew.-% bis 70 Gew.-%, besonders bevorzugt im Bereich von 15 Gew.-% bis 60 Gew.-% liegt, bezogen auf die Summe der Massen der Email-Matrix (i) und der Partikel (ii), wobei die Gesamtkonzentration an Partikeln (a) auf Kohlenstoff basierender elektronisch leitfähiger Materialien 40 Gew.-% oder weniger beträgt bezogen auf die Summe der Massen der Email-Matrix (i) und der Partikel (a).

Die vorliegende Erfindung betrifft somit auch eine elektronisch leitfähige Email-Zusammensetzung bestehend aus oder umfassend
(i) eine bei einer Temperatur im Bereich von 600 °C bis 900 °C, bevorzugt im Bereich von 600 bis 750 °C, schmelzende Email-Matrix
   und
(ii) in die Email-Matrix eingebettete Partikel eines oder mehrerer elektronisch leitfähiger Materialien, die keine Edelmetalle sind, wobei die Partikel (ii)
   - eine Partikelgröße von 700 µm oder kleiner, bevorzugt 300 µm oder kleiner, weiter bevorzugt 150 µm oder kleiner, noch weiter bevorzugt 100 µm oder kleiner, besonders bevorzugt 38 µm oder kleiner aufweisen,
   - und ausgewählt sind aus der Gruppe bestehend aus
      (a) Partikeln auf Kohlenstoff basierender elektronisch leitfähiger Materialien,
      (b) Partikeln sonstiger elektronisch leitfähiger Materialien ausgewählt aus der Gruppe der metallischen elektronisch leitfähigen Materialien, die keine Edelmetalle sind,
      (c) Partikeln, die aus einer Kombination auf Kohlenstoff basierender elektronisch leitfähiger Materialien ausgewählt aus der Gruppe der metallischen elektronisch leitfähigen Materialien und sonstiger elektronisch leitfähiger Materialien, die keine Edelmetalle sind, gebildet sind;
   und die Gesamtkonzentration der Partikel (ii) im Bereich von 0,5 Gew.-% bis 80 Gew.-%, bevorzugt im Bereich von 1 Gew.-% bis 80 Gew.-%, weiter bevorzugt im Bereich von 10 Gew.-% bis 70 Gew.-%, besonders bevorzugt im Bereich von 15 Gew.-% bis 60 Gew.-% liegt, bezogen auf die Summe der Massen der Email-Matrix (i) und der Partikel (ii),
   wobei die Gesamtkonzentration an Partikeln (a) auf Kohlenstoff basierender elektronisch leitfähiger Materialien 40 Gew.-% oder weniger beträgt bezogen auf die Summe der Massen der Email-Matrix (i) und der Partikel (a).

Der Begriff "Email-Zusammensetzung" bezeichnet hier die Gesamtheit aus (i) der Email-Matrix (wie oben definiert), (ii) den in der Email-Matrix eingebetteten Partikeln eines oder mehrerer elektronisch leitfähiger Materialien (wie oben definiert), und optionalen weiteren Bestandteilen, die weder Bestandteil der Email-Matrix (i) sind noch darin eingebettete Partikel (ii) eines oder mehrerer elektronisch leitfähiger Materialien wie oben definiert.

"Elektronisch leitend" bedeutet im Zusammenhang mit der vorliegenden Erfindung, dass der Stromtransport durch Elektronen erfolgt.

Email-Beschichtungen mit der erfindungsgemäßen Email-Zusammensetzung, insbesondere in deren bevorzugten Ausführungsformen, erlauben die Bildung einer homogenen elektronisch leitfähigen Schicht, die über ihre gesamte Oberfläche eine gleichmäßige Abführung elektrischer Ladungen ermöglicht und darüber hinaus den Aufbau eines gleichmäßig verteilten elektrischen Feldes gewährleistet. Durch den Aufbau eines gleichmäßig verteilten elektrischen Feldes muss eine geringere Ladungsmenge je Oberflächeneinheit abgeführt werden als in den Bereichen hoher Feldlinienkonzentration eines ungleichmäßig auf der Oberfläche verteilten Feldes gleicher Feldstärke, denn durch den gleichmäßigen Feldaufbau werden punktuell hohe Feldlinienkonzentration vermieden. Durch die erfindungsgemäße Auswahl der Art, der Partikelform und -größe sowie der Konzentration der Partikel eines oder mehrerer elektronisch leitfähiger Materialien kann je Oberflächeneinheit eine bestimmte maximale Ladungsabführung gewährleistet werden. Weitere Aspekte der Erfindung betreffen eine Beschichtung, insbesondere eine Korrosionsschutzbeschichtung, umfassend eine erfindungsgemäßen Email-Zusammensetzung oder bestehend aus einer erfindungsgemäßen Email-Zusammensetzung, Gegenstände umfassend einen Grundkörper und eine auf der Oberfläche oder einem Teilbereich der Oberfläche des Grundkörpers angeordnete erfindungsgemäße Beschichtung, sowie ein Verfahren zum Herstellen eines derartigen erfindungsgemäßen Gegenstands.

Weitere Aspekte, Details und Vorteile der Erfindung ergeben sich aus der nachfolgenden Beschreibung, den Ausführungsbeispielen, den Figuren und den beigefügten Patentansprüchen.

Die Figuren zeigen:
- Figur 1: den schematischen Aufbau der Prüfstandes zur Ermittlung der Leitfähigkeit von Emailschichten
- Figuren 2 und 3: Strom-Spannungs-Kennlinien von Proben mit Email-Beschichtungen

Für die erfindungsgemäße Email-Zusammensetzung ist die Email-Matrix so auszuwählen, dass sie bei Temperaturen im Bereich von 600 °C bis 900 °C schmilzt. Demnach erfolgt der Aufbrennprozess beim Herstellen der Email-Zusammensetzung bei einer Temperatur im Bereich von 600 °C bis 900 °C. Eigene Untersuchungen haben gezeigt, dass bei einer Aufbrenntemperatur oberhalb von 900 °C die Herstellung von Email-Zusammensetzungen mit homogener Verteilung der eingebetteten Partikeln erschwert ist, da die eingebetteten Partikel an der Oberfläche der Schmelze aufschwimmen und durch den Kontakt mit Luftsauerstoff bzw. in der Email-Matrix gebundenem Sauerstoff oxidiert werden. Bevorzugt ist ein Temperaturbereich von 600 bis 860 °C, und für relativ geringe Schichtdicken ein Temperaturbereich von 600 bis 750 °C, so dass die Gefahr des Oxidierens der eingebetteten Partikel besonders gering ist. Für manche Anwendungszwecke kann es jedoch erforderlich sein, eine Email-Matrix einzusetzen, die bei einer Temperatur im Bereich von 600 °C bis 900 °C schmilzt, die außerhalb dieser bevorzugten Bereiche liegt.

Ansonsten erfordert die vorliegende Erfindung hinsichtlich der Zusammensetzung der Email-Matrix keinerlei Einschränkungen, es können die für den jeweiligen Anwendungszweck üblicherweise eingesetzten Email-Matrixzusammensetzungen bzw. die für deren Herstellung üblicherweise eingesetzten Rohstoffe (Fritten) verwendet werden. Dabei ist es für einige Anwendungsfälle bevorzugt, dass die Email-Matrix der erfindungsgemäßen Email-Zusammensetzung Bornitrid enthält, denn dadurch wird die Abrasionsbeständigkeit der Email-Beschichtung verbessert. Weiterhin ist es in einigen Fällen bevorzugt, dass die erfindungsgemäße Email-Zusammensetzung gemahlenes Altglas (auch als "Glasmilch" bezeichnet) enthält, oder sowohl gemahlenes Altglas als auch Bornitrid enthält. Diese Zusätze sind jedoch für die erfindungsgemäße Email-Zusammensetzung nicht zwingend erforderlich. Sofern die erfindungsgemäße Email-Zusammensetzung Bornitrid und/oder gemahlenes Altglas enthält, werden diese Bestandteile in der nachfolgenden Beschreibung der Email-Matrix (i) zugerechnet.

Die erfindungsgemäße Email-Zusammensetzung enthält in die Email-Matrix eingebettete Partikel eines oder mehrerer elektronisch leitfähiger Materialien, die keine Edelmetalle sind, wobei für die Größe und Konzentration der Partikel die oben definierten Kriterien gelten. Eigene Untersuchungen haben gezeigt, dass durch die erfindungsgemäße Auswahl der Email-Matrix und der Art, Konzentration und Größe der Partikel eines oder mehrerer elektronisch leitfähiger Materialien, insbesondere in den erfindungsgemäß bevorzugten Varianten, Email-Zusammensetzungen erhältlich sind, in denen die eingebetteten Partikel eines oder mehrerer elektronisch leitfähiger Materialien homogen verteilt sind.

"Partikel eines oder mehrerer elektronisch leitfähiger Materialien" bedeutet dabei, dass optional neben einer ersten Sorte Partikel aus einem ersten elektronisch leitfähigen Material auch eine oder mehrere weitere Sorten von Partikeln aus jeweils einem weiteren elektronisch leitfähigen Material in die Email-Matrix eingebettet sind. Beispielsweise können Partikel verschiedener Edelstahllegierungen in die Email-Matrix eingebettet werden, oder Partikel eines metallischen elektronisch leitfähigen Materials und Partikel eines auf Kohlenstoff basierenden elektronisch leitfähigen Materials. Dabei kann ein elektronisch leitfähiges Material, aus dem die in die Email-Matrix eingebetteten Partikel eingebetteten Partikel gebildet sind, seinerseits eine Mischung oder Kombination verschiedener Materialien sein, z. B. eine Legierung aus mehreren Metallen.

Es ist nicht ausgeschlossen, dass die erfindungsgemäßen Email-Zusammensetzungen neben den oben erwähnten Partikeln eines oder mehrerer elektronisch leitfähiger Materialien, die keine Edelmetalle sind, auch Partikel aus Edelmetallen enthält, die in die Email-Matrix eingebettet sind. Bevorzugt enthält die erfindungsgemäße Email-Zusammensetzung weniger als 1 Gew.-% an Edelmetallen, bezogen auf die Summe der Massen der Email-Matrix (i) und der enthaltenen Edelmetalle, weiter bevorzugt weniger als 0,5 Gew.-% an Edelmetallen, bezogen auf die Summe der Massen der Email-Matrix (i) und der enthaltenen Edelmetalle und besonders bevorzugt weniger als 0,1 Gew.-% an Edelmetallen, bezogen auf die Summe der Massen der Email-Matrix (i) und der enthaltenen Edelmetalle. Bevorzugt enthält die erfindungsgemäße Email-Zusammensetzung weniger als 0,1 Vol.-% an Edelmetallen, bezogen auf die Summe der Volumina der Email-Matrix (i) und der enthaltenen Edelmetalle, weiter bevorzugt weniger als 0,01 Vol.-% an Edelmetallen, bezogen auf die Summe der Volumina der Email-Matrix (i) und der enthaltenen Edelmetalle und besonders bevorzugt weniger als 0,001 Vol.-% an Edelmetallen bezogen auf die Summe der Volumina der Email-Matrix (i) und der enthaltenen Edelmetalle. Besonders bevorzugt enthält die erfindungsgemäße Email-Zusammensetzung keine Edelmetalle. Unter Edelmetallen werden die Metalle ausgewählt aus der Gruppe bestehend aus Gold, Silber, Quecksilber, Rhenium, Ruthenium, Rhodium, Palladium, Osmium, Iridium und Platin verstanden.

Falls die elektronisch leitfähige Email-Zusammensetzung Edelmetalle enthält, ist die Konzentration der eingebetteten Partikel eines oder mehrerer elektronisch leitfähiger Materialien, die keine Edelmetalle sind, jedoch ausreichend zur Gewährleistung elektronischer Leitfähigkeit, so dass eine edelmetallfreie, aber ansonsten identische Vergleichs-Email-Zusammensetzung ebenfalls elektronisch leitfähig ist.

Die erfindungsgemäß in die Email-Matrix eingebetteten auf Kohlenstoff basierenden elektronisch leitfähigen Materialien sind bevorzugt ausgewählt aus der Gruppe bestehend aus Graphit, Graphitexpandat, Glaskohlenstoff, Carbon Black, Ruß und Carbonfasern.

Metallische elektronisch leitfähige Materialien sind bevorzugt ausgewählt aus der Gruppe der Edelstahllegierungen (legierte Edelstähle).

Auf Kohlenstoff basierende elektronisch leitfähige Materialien sind Materialien, die aus Kohlenstoff bestehen oder elementaren Kohlenstoff als wesentlichen Bestandteil (90 Gew.-% oder mehr, bevorzugt 92 Gew.-% oder mehr) enthalten. Die auf Kohlenstoff basierenden elektronisch leitfähigen Materialien sind bevorzugt ausgewählt aus der Gruppe bestehend aus Graphit, Glaskohlenstoff, Graphitexpandat, Carbon Black, Ruß und Carbonfasern.

Graphit ist die hexagonale oder rhomboedrische kristalline, stabile Modifikation des Kohlenstoffs. Dabei kann es sich um Naturgraphit (ein natürlich vorkommendes Mineral, in welchem Kohlenstoff-Atome in einem hexagonalen Kristallgitter in übereinander parallel verlaufenden Schichtebenen angeordnet sind) oder synthetischen (künstlich hergestellten) Graphit handeln. Synthetischer Graphit kann auch in Form von Fasern vorliegen (Graphitfasern). Aufgrund seiner aus übereinander liegenden Schichtebenen aufgebauten Struktur zeigt Graphit eine ausgeprägte Anisotropie der physikalischen und chemischen Eigenschaften.

Glaskohlenstoff ist eine granulare, nicht graphitierbare Form des Kohlenstoffs mit einer hohen Isotropie der physikalischen und chemischen Eigenschaften. Die Oberflächen dieses Materials erscheinen glasartig.

Expandierter Graphit (Graphitexpandat) wird aus kristallin gut geordnetem, schuppenförmigem Naturgraphit hergestellt. Im Produktionsprozess erfahren die Schuppen durch eine chemische Behandlung (Bildung einer Einlagerungsverbindung in Form eines Graphitsalzes) und anschließende thermische Behandlung (Zersetzung der Einlagerungsverbindung bei ca. 1000 °C) eine Volumenexpansion senkrecht zu den Schichtebenen um den Faktor 200 bis 400. Es entstehen lockere "Würmchen"-artige Partikel, die z. B. durch Mahlen, Compoundieren, Pressen, Laminieren und Kalandrieren weiterverarbeitet werden. Dabei behält der Graphit die ihm eigene, hohe thermische und elektronische Leitfähigkeit bei, die aufgrund der hexagonalen Gitterstruktur stark richtungsabhängig (anisotrop) ist.

Ruß ist eine Form des Kohlenstoffs, die sich bei unvollständiger Verbrennung bzw. thermischer Spaltung dampfförmiger Kohlenstoff-haltiger Substanzen bildet.

Carbon black ist ein industriell durch thermische Zersetzung oder unvollständige Verbrennung von Kohlenwasserstoffen unter kontrollierten Bedingungen hergestelltes kolloidales Kohlenstoffmaterial.

Carbonfasern sind Fasern, die mindestens 92 Gew.-% Kohlenstoff umfassen. Sie sind erhältlich durch Gasphasenabscheidung von Kohlenstoff aus gasförmigen Kohlenwasserstoffen oder Pyrolyse kohlenstoffhaltiger Precursorfasern. In Carbonfasern liegt Kohlenstoff nicht in der dreidimensionalen Kristallstruktur des Graphits vor.

Um eine homogene Verteilung der eingebetteten Partikel zu erreichen, ist es entscheidend, dass beim Herstellen der Email-Zusammensetzung, d. h. beim Aufschmelzen auf ein Substrat, ein Aufschwimmen der Partikel auf der Emailschmelze vermieden wird. Ein solches Aufschwimmen der Partikel führt dazu, dass die Partikel sich an der Emailoberfläche anreichern, so dass eine Email-Zusammensetzung mit einer rauen und porösen Oberfläche resultiert. Durch den Kontakt der auf der Oberfläche schwimmenden Partikel mit Luftsauerstoff bzw. in der Email-Matrix gebundenen Sauerstoff und die hohen Temperaturen beim Aufbrennen besteht die Gefahr der Oxidation der Partikel, die zu einem Verlust der elektronischen Leitfähigkeit führen kann. Außerdem ist aufgrund der Rauigkeit und Porosität der Oberfläche die Beständigkeit solcher Schichten gegenüber Abrasion und Korrosion deutlich vermindert.

Ein bei der Auswahl des oder der elektronisch leitfähigen Materialien und bei der Wahl der einzusetzenden Konzentration und Größe der Partikel zu beachtendes Kriterium ist die Benetzbarkeit des elektronisch leitfähigen Materials durch die Email-Matrix. Eigene Untersuchungen haben gezeigt, dass Partikel aus Metallen, insbesondere aus Edelstahl, sich durch eine hohe Benetzbarkeit durch die Email-Matrix auszeichnen und daher besonders homogen in der Email-Matrix verteilt werden können. Bei Partikeln (a) auf Kohlenstoff basierender elektronisch leitfähiger Materialien ist die Benetzbarkeit durch die Email-Matrix geringer ausgeprägt, daher lassen sich derartige Partikel nur in geringeren Konzentrationen homogen in der Email-Matrix verteilen.

Die Konzentration der elektronisch leitfähigen Partikel (ii) liegt im Bereich von 0,09 Vol.-% bis 67,8 Vol.-%, bevorzugt im Bereich von 0,18 Vol.-% bis 67,8 Vol.-%, weiter bevorzugt im Bereich von 1,9 Vol.-% bis 55,2 Vol.-%, besonders bevorzugt im Bereich von 3,0 Vol.-% bis 44,2 Vol.-%, bezogen auf die Summe der Volumina der Email-Matrix (i) und der Partikel (ii), In einer bevorzugten Ausführungsform liegt die Konzentration der elektronisch leitfähigen Partikel (ii) im Bereich von 0,5 Gew.-% bis 80 Gew.-%, bevorzugt im Bereich von 1 Gew.-% bis 80 Gew.-%, weiter bevorzugt im Bereich von 10 Gew.-% bis 70 Gew.-%, besonders bevorzugt im Bereich von 15 Gew.-% bis 60 Gew.-%, bezogen auf die Summe der Massen der Email-Matrix und der Partikel eines oder mehrerer elektronisch leitfähiger Materialien.

Dabei ist jedoch zu beachten, dass die Oberfläche einer Beschichtung umfassend eine erfindungsgemäße Email-Zusammensetzung bei relativ hohen Konzentrationen in die Email-Matrix eingebetteter Partikel eines oder mehrerer elektronisch leitfähiger Materialien rau und porös und damit korrosionsanfällig werden kann. Daher ist bei der Wahl der Konzentration der eingebetteten Partikel eines oder mehrerer elektronisch leitfähiger Materialien im allgemeinen eine Abstimmung zwischen den Erfordernissen der elektronischen Leitfähigkeit und der Oberflächenbeschaffenheit erforderlich.

Für Partikel auf Kohlenstoff basierender elektronisch leitfähiger Materialien gilt jedoch die Maßgabe, dass die Gesamtkonzentration an Partikeln (a) auf Kohlenstoff basierender elektronisch leitfähiger Materialien 48 Vol.-% oder weniger, in einer bevorzugten Ausführungsform 40 Gew.-% oder weniger beträgt, bezogen auf die Summe der Volumina bzw. Massen der Email-Matrix (i) und der Partikel (a).

### Darüber hinaus ist es bevorzugt, dass

- die Gesamtkonzentration von Partikeln aus einem elektronisch leitfähigen Material ausgewählt aus der Gruppe bestehend aus Graphit, Graphitexpandat, Glaskohlenstoff, Carbon Black und Ruß 48 Vol.-% oder weniger, bevorzugt 6,8 Vol.-% oder weniger beträgt, bezogen auf die Summe der Volumina der Email-Matrix (i) und der Partikel aus einem elektronisch leitfähigen Material ausgewählt aus der Gruppe bestehend aus Graphit, Graphitexpandat, Glaskohlenstoff, Carbon Black und Ruß,
- die Gesamtkonzentration von Partikeln in Form von Carbonfasern 48 Vol.-% oder weniger, bevorzugt 15,2 Vol.-% oder weniger beträgt, bezogen auf die Summe der Volumina der Email-Matrix (i) und der Partikel in Form von Carbonfasern.

Darüber hinaus ist es in bestimmten Fällen bevorzugt, dass
- die Gesamtkonzentration von Partikeln aus einem elektronisch leitfähigen Material ausgewählt aus der Gruppe bestehend aus Graphit, Graphitexpandat, Glaskohlenstoff, Carbon Black und Ruß 40 Gew.-% oder weniger, bevorzugt 5 Gew.-% oder weniger beträgt, bezogen auf die Summe der Massen der Email-Matrix (i) und der Partikel aus einem elektronisch leitfähigen Material ausgewählt aus der Gruppe bestehend aus Graphit, Graphitexpandat, Glaskohlenstoff, Carbon Black und Ruß,
- die Gesamtkonzentration von Partikeln in Form von Carbonfasern 40 Gew.-% oder weniger, bevorzugt 10 Gew.-% oder weniger beträgt, bezogen auf die Summe der Massen der Email-Matrix (i) und der Partikel in Form von Carbonfasern, wobei die Dichte der Carbonfasern bevorzugt 1,8 g/cm³ beträgt.

Die Größe der erfindungsgemäß in die Email-Matrix eingebetteten Partikel eines oder mehrerer elektronisch leitfähiger Materialien beträgt 700 µm oder weniger, bevorzugt 300 µm oder kleiner, in einigen bevorzugten Ausführungsformen 38 µm oder weniger, während für andere Ausführungsformen Partikelgrößen im Bereich von 38 µm bis 150 µm bevorzugt sind. Größere Partikel einer polydispersen Partikelgrößenverteilung, deren Partikelgröße gleich der Gesamtdicke der Email-Beschichtung ist bzw. nur um den Faktor 2 bis 3 kleiner ist als die Gesamtdicke der Emailschicht, können einzelne direkte leitende Kontakte zwischen Emailoberfläche und Grundkörper herstellen. Dies würde jedoch in einer punktuellen Konzentration der Ladungsträgerabführung resultieren anstelle der erfindungsgemäß angestrebten gleichmäßig über die Oberfläche der Emailschicht verteilten Ladungsträgerabführung. Bei einer punktuellen Abführung großer Konzentrationen an Ladungsträgern besteht die Gefahr der Ausbildung eines nicht-thermischen Plasmas und der elektrischen Überlastung, d.h. des elektrischen Durchschlags des Emailkörpers an den Entladungspunkten. Daher ist es erfindungsgemäß bevorzugt, wenn das Verhältnis zwischen Partikelgröße und Schichtdicke kleiner ist als 1, bevorzugt kleiner als 0,33 (1:3).

Die Partikelfraktion mit der gewünschten Partikelgröße wird beispielsweise durch Sieben erhalten. Der Begriff Partikelgröße bezeichnet bei annähernd sphärischen Partikeln (Aspektverhältnis annähernd 1) den Durchmesser, bei anderweitig geformten Partikeln (Aspektverhältnis > 1) die jeweils größte Abmessung, z.B. bei faserförmigen Partikeln die Länge bzw. den Durchmesser der volumengleichen Kugel (Äquivalentdurchmesser dᵥ). Es können auch Mischungen aus Partikeln verschiedener Größe eingesetzt werden.

Der Anteil nanoskaliger Partikel (Partikelgröße < 1 µm) an den in die Email-Matrix eingebetteten Partikeln eines oder mehrerer elektronisch leitfähiger Materialien beträgt bevorzugt 50 Vol.-% oder weniger, weiter bevorzugt 20 Vol.-% oder weniger, besonders bevorzugt 10 Vol.-% oder weniger, ganz besonders bevorzugt 1 Vol.-% oder weniger. In einer bevorzugten Ausführungsform der Erfindung beträgt der Anteil nanoskaliger Partikel bevorzugt 50 Gew.-% oder weniger, weiter bevorzugt 20 Gew.-% oder weniger, besonders bevorzugt 10 Gew.-% oder weniger, ganz besonders bevorzugt 1 Gew.-% oder weniger.

Die in die Email-Matrix eingebetteten Partikel sind bevorzugt Partikel eines oder mehrerer elektronisch leitfähigen Materialien, die einen Schmelzpunkt im Bereich von 600 °C bis 1800 °C aufweisen.

Dabei ist das elektronisch leitfähige Material bevorzugt eine Edelstahllegierung.

Erfindungsgemäß bevorzugt werden in bestimmten Fällen elektronisch leitfähige Materialien, insbesondere Edelstahllegierungen, eingesetzt mit einem Schmelzpunkt im Bereich der Schmelztemperatur (Aufbrenntemperatur) der Email-Matrix. Durch das Aufschmelzen des elektronisch leitfähigen Materials beim Emaillieren wird eine nahezu homogene Verteilung des elektronisch leitfähigen Materials in der Email-Matrix erreicht. Erfindungsgemäß ebenfalls bevorzugt sind Edelstahllegierungen mit einem Schmelzpunkt oberhalb der Schmelztemperatur (Aufbrenntemperatur) der Email-Matrix. Die Edelstahlpartikel werden beim Aufbrennen von der geschmolzenen Email-Matrix benetzt und so unter weitgehender Beibehaltung ihrer ursprünglichen Partikelform homogen verteilt in die Email-Matrix eingebettet.

Die Homogenität der Verteilung der in die Email-Matrix eingebetteten Partikel eines oder mehrerer elektronisch leitfähiger Materialien wird außerdem von der Partikelgröße und -form sowie der Konzentration der elektronisch leitfähigen Partikel, der Dichte der elektronisch leitfähigen Partikel und der Benetzbarkeit der leitfähigen Partikel beeinflusst.

Jedes eingebettete Partikel bildet auf der Oberfläche der Emailschicht einen Ableitpunkt für elektrische Ladungen. Je homogener die Verteilung der eingebetteten Partikel eines oder mehrerer elektronisch leitfähiger Materialien, desto weniger empfindlich ist die Emailschicht gegenüber elektrischen Entladungsschlägen (Überschlägen), denn je homogerner die Verteilung der Partikel eines oder mehrerer elektronisch leitfähiger Materialien, desto gleichmäßiger verteilt sich die abzuführende Menge an Ladungsträgern über die Oberfläche und die Schichtdicke der Beschichtung. Bei einer inhomogenen Verteilung der eingebetteten Partikel eines oder mehrerer elektronisch leitfähiger Materialien hingegen ist nur eine punktuelle Abführung der Ladungsträger möglich (an jenen Punkten der Email-Beschichtung, an denen sich tatsächlich ein Partikel eines elektronisch leitfähigen Materials befindet). Die durch die punktuell präsenten Partikel eines oder mehrerer elektronisch leitfähiger Materialien gebildeten Entladungskanäle sind - abhängig von der Breite bzw. dem Durchmesser des Entladungskanals - hinsichtlich der maximal abführbaren Ladungsträgermenge je Zeiteinheit begrenzt. Daher besteht bei einer inhomogenen Verteilung der eingebetteten Partikel eines oder mehrerer elektronisch leitfähiger Materialien zumindest bei hohen Feldstärken noch die Gefahr von Schädigungen der Emailschicht durch Überschläge.

Durch die bei homogener Verteilung der eingebetteten Partikel gleichmäßigere Verteilung der Feldlinien stellt sich eine geringere lokale Feldstärke auf der Oberfläche der Partikel ein, und damit wird vermieden, dass die Feldlinienkonzentration den Wert für die Zündspannung (Überschlagspannung) des umgebenden Mediums (Luft, Fluide, etc.) erreicht oder überschreitet und durch die dabei erfolgende Ionisierung dieses Mediums zusätzlich Ladungsträger erzeugt werden. Die Erzeugung zusätzlicher Ladungsträger kann dazu führen, dass das Angebot an Ladungsträgern höher ist als je Zeiteinheit durch den vorliegenden Entladungskanal im Email abtransportiert werden kann. Dies kann nicht nur zu einer punktuellen Erwärmung, sondern auch zu einer Beschädigung der Emailschicht (infolge der zu hohen punktuellen Potentialdifferenz kann es zu einem elektrischen Durchschlag in der Emailschicht kommen) und damit zu einer Beeinträchtigung der Korrosionsschutzwirkung führen.

Die Erzeugung sekundärer Ladungsträger auf der Emailoberfläche ist insbesondere kritisch bei der Anwendung von Email-Beschichtungen in Elektroabscheidern (Elektrofiltern). Beim Einsatz im Behälter- und Apparatebau ist dieser Effekt weniger kritisch, denn die erfindungsgemäße Email-Zusammensetzung ist ab einem Potential größer Null elektronisch leitfähig, so dass der Aufbau eines elektrischen Feldes bzw. einer Potentialdifferenz infolge nicht abführbarer Ladungsträger von vornherein unterbunden wird. Apparate und Behälter enthalten typischerweise keine aktive Spannungsquelle, die in dem mit der Email-Schicht in Kontakt stehenden Medium Ladungsträger generiert. Ladungen werden dort allenfalls infolge von Reibung oder ähnlichen Mechanismen erzeugt. Dabei können dank der sofortigen Ladungsträgerabführung über die elektronisch leitfähige Emailschicht keine hohen Feldstärken aufgebaut werden. Im Gegensatz dazu weist ein Elektroabscheider (Elektrofilter) eine aktive Spannungsquelle (Sprühelektrode und Niederschlagselektrode, letztere z. B. in Form der mit einer Email-Beschichtung versehenen geerdeten Wand des Abscheiders) auf, die in dem mit der Emailschicht in Kontakt stehenden Medium Ladungsträger erzeugt. Die erzeugten Ladungsträger müssen zur Vermeidung hoher Feldstärken auf der Niederschlagselektrode abgeführt werden. Die Stärke des elektrischen Feldes ist gleichzusetzen mit der Anzahl der Feldlinien. Je mehr Feldlinien vorliegen, desto notwendiger ist es, dass diese gleichmäßig verteilt über die Niederschlagselektrode (Email-Oberfläche) abgeführt werden, um sekundäre Ladungsträgerproduktionen zu vermeiden. Erfolgt dies nicht, wird durch die zusätzliche Ladungsträgerproduktion die Bildung einer Entladungsstrecke zwischen der eine Email-Beschichtung aufweisenden Niederschlagselektrode und der Sprühelektrode des Elektroabscheiders (Rücksprühen) begünstigt. Folglich wird die mögliche Betriebsspannung und damit die Leistung des Elektroabscheiders reduziert.

Die in die Email-Matrix eingebetteten Partikel eines oder mehrerer elektronisch leitfähiger Materialien umfassen Partikel mit einer nicht-sphärischen und/oder Partikel mit einer sphärischen Form.

Je mehr die Form der Partikel sich einer sphärischen Form (Kugelform) annähert, desto homogener ist die Verteilung der eingebetteten Partikel in der Email-Matrix. Dadurch wird die Bündelung der Feldlinien und damit ihre Konzentration je Partikel (jedes Partikel bildet auf der Oberfläche der Emailschicht einen Ableitpunkt für den Strom) reduziert. Außerdem verteilen sich bei kugelförmigen Partikeln die Feldlinien, die auf ein Partikel treffen, gleichmäßiger auf der Oberfläche des Partikels, während sie sich bei nicht-sphärischen Partikeln auf den Spitzen der Partikel konzentrieren. Besonders bevorzugt sind hierbei Partikel mit sphärischer Partikelform, einer Partikelgröße von 150 µm oder weniger, bevorzugt 38 µm oder weniger und einer engen Partikelgrößenverteilung.

Die vorliegende Erfindung ist aber nicht auf die Verwendung sphärischer elektronisch leitfähiger Partikel beschränkt. Für die homogene Verteilung der elektronisch leitfähigen Partikel in der Email-Matrix ist die Benetzung der Partikeloberfläche durch die geschmolzene Email-Matrix beim Aufbrennprozess von großer Bedeutung, und für die Partikel eines elektronisch leitfähigen Materials ist die Benetzung durch die geschmolzenen Email-Matrix um so größer, je größer die spezifische Oberfläche der Partikel ist. Nicht-sphärische Partikel haben eine größere spezifische Oberfläche als sphärische und erlauben dadurch eine höhere Benetzung, weisen jedoch die oben beschriebene starke Konzentration der Feldlinien an den Spitzen auf. Daher ist es erfindungsgemäß bevorzugt, dass an der Oberfläche einer erfindungsgemäßen Emailschicht die elektronisch leitfähigen Partikel ausschließlich oder überwiegend sphärische Partikel sind.

Durch die Kombination sphärischer und nicht-sphärischer Partikel und/oder von Partikeln verschiedener Partikelgrößen lässt sich die für das Erreichen der Perkolationsschwelle (Bildung durchgehender elektronischer Leitungspfade) nötige Konzentration an Partikeln herabsetzen. Die Fähigkeit zur Netzwerkbildung und damit die zum Erreichen der Perkolationsschwelle nötige Konzentration der eingebetteten Partikel hängt sehr stark von der Partikelform, der Partikelgröße und der Größenverteilung der eingebetteten Partikel ab. Additive aus großen Partikeln mit breiter Partikelgrößenverteilung bilden bereits bei geringerem Anteil in der Matrix durchgehende Netzwerke als Additive aus kleinen Partikeln mit enger Partikelgrößenverteilung. Beispielsweise können Partikel mit länglich ausgedehnter Form (z. B. Graphitexpandat oder Carbonfasern) Leitungsbrücken zwischen kleineren, z. B. kugelförmigen Partikeln ausbilden. Kleinere kugelförmige Partikel können ihrerseits Zwischenräume zwischen größeren, sperrigen Partikeln überbrücken. Besonders bevorzugt sind Kombinationen von Partikeln mit einer Partikelgröße im Bereich von 38 bis 150 µm und Partikeln mit einer Partikelgröße kleiner als 38 µm.

Die elektronische Leitfähigkeit einer erfindungsgemäßen Email-Zusammensetzung beträgt vorzugsweise bei einer Spannung von 100 V von 1*10⁻¹³ [S/cm] oder mehr, bevorzugt 1*10⁻¹² [S/cm] oder mehr, besonders bevorzugt 4*10⁻⁸ [S/cm] oder mehr. Bei einer Spannung von 40 kV beträgt die elektronische Leitfähigkeit einer erfindungsgemäßen Email-Zusammensetzung vorzugsweise 1*10⁻⁵ [S/cm] oder mehr, weiter bevorzugt 1*10¹ [S/cm] oder mehr, besonders bevorzugt 1,4*10⁴ [S/cm] oder mehr.

Eine bevorzugte erfindungsgemäße Email-Zusammensetzung umfasst (i) eine Email-Matrix wie oben definiert und (ii) in diese Email-Matrix eingebettete Partikel einer oder mehrerer Edelstahllegierungen in einer Konzentration von 4,2 Vol.-% bis 44,2 Vol.-%, besonders bevorzugt 10,5 Vol.-% bis 44,2 Vol.-%, bezogen auf die Summe der Volumina der Email-Matrix (i) und der Partikel (ii) einer oder mehrerer Edelstahllegierungen. Eine weitere bevorzugte Ausführungsform der erfindungsgemäßen Email-Zusammensetzung umfasst Partikel einer oder mehrerer Edelstahllegierungen in einer Konzentration von 20 Gew.-% bis 60 Gew.-%, besonders bevorzugt 40 Gew.-% bis 60 Gew.-%, bezogen auf die Summe der Massen der Email-Matrix (i) und der Partikel (ii) einer oder mehrerer Edelstahllegierungen. In einigen bevorzugten Ausführungsformen ist die Partikelgröße der in diese Email-Matrix eingebetteten Partikel einer oder mehrerer Edelstahllegierungen kleiner als 38 µm, während für andere Ausführungsformen Partikelgrößen im Bereich von 38 µm bis 150 µm bevorzugt sind.

Ebenfalls bevorzugt ist eine erfindungsgemäße Email-Zusammensetzung umfassend (i) eine Email-Matrix wie oben definiert und (ii) in diese Email-Matrix eingebettete Partikel einer oder mehrerer Edelstahllegierungen und in diese Email-Matrix eingebettete Partikel eines oder mehrerer auf Kohlenstoff basierender elektronisch leitfähiger Materialien, wobei die Gesamtkonzentration der Partikel der Edelstahllegierungen und der Partikel auf Kohlenstoff basierender elektronisch leitfähiger Materialien elektronisch leitfähiger Materialien 4,2 Vol.-% bis 34,5 Vol.% beträgt, bezogen auf die Summe der Volumina der Email-Matrix (i) und der elektronisch leitfähigen Partikel (ii), und das Volumenverhältnis der Partikel der Edelstahllegierungen zu den Partikeln auf Kohlenstoff basierender elektronisch leitfähiger Materialien im Bereich von 1 : 1 bis 50 : 1, bevorzugt 4:1 bis 6:1 liegt. In einer erfindungsgemäß besonders bevorzugten Variante dieser erfindungsgemäßen Email-Zusammensetzung beträgt die Gesamtkonzentration der Partikel der Edelstahllegierungen und der Partikel auf Kohlenstoff basierender elektronisch leitfähiger Materialien 20 Gew.-% bis 50 Gew.%, bezogen auf die Summe der Massen der Email-Matrix (i) und der Partikel (ii), und das Massenverhältnis der Partikel der Edelstahllegierungen zu den Partikeln auf Kohlenstoff basierender elektronisch leitfähiger Materialien im Bereich von 1 : 1 bis 10 : 1, bevorzugt 4:1 bis 6:1 liegt.

Bevorzugt ist die Partikelgröße der in diese Email-Matrix eingebetteten Partikel einer oder mehrerer Edelstahllegierungen und/oder der in diese Email-Matrix eingebetteten Partikel eines oder mehrerer auf Kohlenstoff basierender elektronisch leitfähiger Materialien kleiner als 38 µm. Bevorzugt ist das auf Kohlenstoff basierende elektronisch leitfähige Material Graphit.

Die erfindungsgemäß bevorzugten Email-Zusammensetzungen zeichnen sich aus durch eine hohe elektronische Leitfähigkeit und eine hohe chemische Beständigkeit. Die erfindungsgemäß besonders bevorzugten Email-Zusammensetzungen sind zur Beschichtung der Niederschlagselektrode eines Elektroabscheiders geeignet, denn wegen ihrer hohen elektronischen Leitfähigkeit wird die Bildung sekundärer Ladungsträger und deren Rücksprühen zur Sprühelektrode vermieden. Zu weiteren Details und Eigenschaften dieser erfindungsgemäß bevorzugten Email-Zusammensetzungen wird auf die Ausführungsbeispiele verwiesen.

Ein weiterer Aspekt der vorliegenden Erfindung betrifft eine Beschichtung, insbesondere eine Korrosionsschutzbeschichtung, umfassend oder bestehend aus einer erfindungsgemäßen Email-Zusammensetzung wie oben definiert.

Dabei ist es bevorzugt, wenn die erfindungsgemäße Beschichtung eine erfindungsgemäße Email-Zusammensetzung (wie oben definiert) in einer auf die Größe der zu beschichtenden Oberfläche bezogenen Menge von 0,01 g/cm² bis 5 g/cm² umfasst oder daraus besteht.

Bevorzugt weist die erfindungsgemäße Beschichtung eine Dicke von 10 µm bis 5000 µm, besonders bevorzugt von 200 µm bis 500 µm, auf.

In bevorzugten Ausführungsformen umfasst die erfindungsgemäße Beschichtung mehrere aufeinanderfolgende Emailschichten, die sich hinsichtlich ihrer Zusammensetzung und/oder ihrer Schichtdicke und/oder ihrer Aufbrenntemperatur unterscheiden. So variiert beispielsweise die Zusammensetzung der Email-Matrix bzw. die Art, Konzentration und/oder Größe der eingebetteten Partikel eines oder mehrerer elektronisch leitfähiger Materialien zwischen den verschiedenen Emailschichten.

In einer bevorzugten Variante umfasst eine erfindungsgemäße Beschichtung eine unmittelbar auf der Oberfläche des beschichteten Grundkörpers angeordnete erste Emailschicht sowie eine auf der ersten Emailschicht angeordnete zweite Emailschicht, wobei die erste Emailschicht eine Email-Zusammensetzung enthält umfassend (i) eine Email-Matrix mit einer für ein Grundemail geeigneten Zusammensetzung und (ii) in diese Email-Matrix eingebettete Partikel eines oder mehrerer metallischer elektronisch leitfähiger Materialien, und die zweite Schicht eine Email-Zusammensetzung enthält umfassend (i) eine Email-Matrix mit einer für ein Deckemail geeigneten Zusammensetzung und (ii) in diese Email-Matrix eingebettete Partikel eines oder mehrerer metallischer elektronisch leitfähiger Materialien. In einer weiteren bevorzugten Variante befinden sich zwischen einer unmittelbar auf der Oberfläche des beschichteten Grundkörpers angeordneten ersten Emailschicht, die eine Email-Zusammensetzung enthält umfassend (i) eine Email-Matrix mit einer für ein Grundemail geeigneten Zusammensetzung und (ii) in diese Email-Matrix eingebettete Partikel eines oder mehrerer metallischer elektronisch leitfähiger Materialien, und einer die äußere Begrenzung der Beschichtung bildenden Emailschicht, die eine Email-Zusammensetzung enthält umfassend (i) eine Email-Matrix mit einer für ein Deckemail geeigneten Zusammensetzung und (ii) in diese Email-Matrix eingebettete Partikel eines oder mehrerer metallischer elektronisch leitfähiger Materialien, eine oder mehrere weitere jeweils eine erfindungsgemäße Emailzusammensetzung enthaltende Emailschichten, wobei die Emailzusammensetzung von Schicht zu Schicht variiert.

Besonders vorteilhaft ist beispielsweise eine Beschichtung umfassend mehrere Emailschichten, wobei die Konzentration der Partikel eines oder mehrerer elektronisch leitfähiger Materialien von Schicht zu Schicht mit zunehmendem Abstand von der Oberfläche des beschichteten Grundkörpers abnimmt. Überraschenderweise hat sich gezeigt, dass mit einem solchen Aufbau der Beschichtung sowohl eine hohe elektronische Leitfähigkeit als auch eine glatte und geschlossene und somit wenig korrosionsanfällige Oberfläche der Beschichtung erreichen lässt. Besonders vorteilhaft ist eine mehrschichtig ausgebildete Beschichtung umfassend eine unmittelbar auf der Oberfläche des beschichteten Grundkörpers angeordnete ersten Emailschicht und eine auf der ersten Emailschicht angeordnete zweite Emailschicht, wobei die Konzentration der eingebetteten Partikel eines oder mehrerer elektronisch leitfähiger Materialien in der ersten Emailschicht größer ist als in der zweiten. Damit wird einerseits eine elektronische Leitfähigkeit erreicht, die höher ist als die einer Beschichtung, die nur eine einzige Emailschicht umfasst mit einer Schichtdicke und Konzentration eingebetteter Partikel eines oder mehrerer elektronisch leitfähiger Materialien wie die zweite Emailschicht der oben definierten mehrschichtig ausgebildeten Beschichtung, und andererseits sind Oberflächenbeschaffenheit und Korrosionsbeständigkeit besser als bei einer Beschichtung, die nur eine einzige Emailschicht umfasst mit einer Schichtdicke und Konzentration eingebetteter Partikel eines oder mehrerer elektronisch leitfähiger Materialien wie die erste Emailschicht der oben definierten mehrschichtig ausgebildeten Beschichtung.

Außerdem ist es vorteilhaft, eine erfindungsgemäße Beschichtung als Abfolge mehrerer Emailschichten auszubilden, wobei die Summe der Schichtdicken der einzelnen Emailschichten der gewünschten Gesamtdicke der Emailschicht entspricht. Dabei liegt die Dicke jeder einzelnen Emailschicht vorzugsweise in derselben Größenordnung wie die Partikelgröße der eingebetteten Partikel eines oder mehrerer elektronisch leitfähiger Materialien. Dadurch wird erreicht, dass in jeder einzelnen Emailschicht die eingebetteten Partikel relativ homogen verteilt sind, so dass eine Beschichtung mit einer über die gesamte Schichtdicke relativ homogenen Verteilung der eingebetteten Partikel vorliegt. Dadurch wird eine Vielzahl gleichmäßig verteilter direkter elektronisch leitender Kontakte zwischen dem Grundkörper und der Emailoberfläche bereitgestellt.

In den Ausführungsformen der erfindungsgemäßen Beschichtung, die mehrere aufeinanderfolgende Emailschichten aufweisen, ist es besonders bevorzugt, wenn in der äußersten, d.h. am weitesten von der Oberfläche des Grundkörpers entfernten, Emailschicht, die elektronisch leitfähigen Partikel nahezu ausschließlich sphärische oder annähernd sphärische Partikel sind, um eine punktuelle Erhöhung der Feldlinienverteilung zu vermeiden. In den darunter liegenden, d.h. näher zur der Oberfläche des Grundkörpers angeordneten Schichten ist aber die in bestimmten Fällen die Verwendung nicht-sphärischer Partikel vorteilhaft wegen der aufgrund der höheren spezifischen Oberfläche verbesserten Benetzung durch die geschmolzene Email-Matrix beim Aufbrennvorgang.

Besonders bevorzugt werden in erfindungsgemäßen Beschichtungen die Merkmale mehrerer oder aller der oben beschriebenen bevorzugten Varianten miteinander kombiniert.

In einer für bestimmte Anwendungsfälle besonders bevorzugten Ausführungsform umfasst eine erfindungsgemäße Beschichtung eine unmittelbar auf der Oberfläche des beschichteten Grundkörpers angeordnete erste Emailschicht sowie eine auf der ersten Emailschicht angeordnete zweite Emailschicht, wobei
- die erste Emailschicht eine Email-Zusammensetzung enthält umfassend (i) eine Email-Matrix mit einer für ein Grundemail geeigneten Zusammensetzung und (ii) in diese Email-Matrix eingebettete Partikel eines oder mehrerer metallischer elektronisch leitfähiger Materialien in einer Konzentration im Bereich von 4,2 bis 82.6 Vol.-%, bevorzugt im Bereich von 8,7 bis 67,8 Vol.-%, besonders bevorzugt im Bereich von 10,5 bis 44,2 Vol.-%, bezogen auf die Summe der Volumina der Email-Matrix (i) und der Partikel (ii) eines oder mehrerer metallischer elektronisch leitfähiger Materialien, und
- die zweite Emailschicht eine Email-Zusammensetzung enthält umfassend (i) eine Email-Matrix mit einer für ein Deckemail geeigneten Zusammensetzung und (ii) in diese Email-Matrix eingebettete Partikel eines oder mehrerer metallischer elektronisch leitfähiger Materialien in einer Konzentration im Bereich von 3,0 bis 55,2 Vol.-%, bevorzugt 4,2 bis 34,5 Vol.-%, besonders bevorzugt 4,2 bis 22,1 Vol,-% bezogen auf die Summe der Volumina der Email-Matrix (i) und der Partikel (ii) eines oder mehrerer metallischer elektronisch leitfähiger Materialien,
wobei die Konzentration der Partikel eines oder mehrerer metallischer elektronisch leitfähiger Materialien in der ersten Emailschicht größer ist als die Konzentration der Partikel eines oder mehrerer metallischer elektronisch leitfähigen Materialien in der zweiten Emailschicht.

In einer weiteren für bestimmte Anwendungsfälle besonders bevorzugten Ausführungsform umfasst eine erfindungsgemäße Beschichtung eine unmittelbar auf der Oberfläche des beschichteten Grundkörpers angeordnete erste Emailschicht sowie eine auf der ersten Emailschicht angeordnete zweite Emailschicht, wobei
- die erste Emailschicht eine Email-Zusammensetzung enthält umfassend (i) eine Email-Matrix mit einer für ein Grundemail geeigneten Zusammensetzung und (ii) in diese Email-Matrix eingebettete Partikel eines oder mehrerer metallischer elektronisch leitfähiger Materialien in einer Konzentration im Bereich von 20 bis 90 Gew.-%, bevorzugt im Bereich von 35 bis 80 Gew.-%, besonders bevorzugt im Bereich von 40 bis 60 Gew.-%, bezogen auf die Summe der Massen der Email-Matrix (i) und der Partikel (ii) eines oder mehrerer metallischer elektronisch leitfähiger Materialien, und
- die zweite Emailschicht eine Email-Zusammensetzung enthält umfassend (i) eine Email-Matrix mit einer für ein Deckemail geeigneten Zusammensetzung und (ii) in diese Email-Matrix eingebettete Partikel eines oder mehrerer metallischer elektronisch leitfähiger Materialien in einer Konzentration im Bereich von 15 bis 70 Gew.-%, bevorzugt 20 bis 50 Gew.-%, besonders bevorzugt 20 bis 35 Gew.-% bezogen auf die Summe der Massen der Email-Matrix (i) und der Partikel (ii) eines oder mehrerer metallischer elektronisch leitfähiger Materialien,
wobei die Konzentration der Partikel eines oder mehrerer metallischer elektronisch leitfähiger Materialien in der ersten Emailschicht größer ist als die Konzentration der Partikel eines oder mehrerer metallischer elektronisch leitfähigen Materialien in der zweiten Emailschicht.

Die in die Email-Matrix eingebetteten Partikel sind dabei bevorzugt Partikel aus Edelstahllegierungen, bevorzugt mit einer Partikelgröße im Bereich von 38 µm bis 150 µm oder mit einer Partikelgröße von 38 µm oder kleiner. Bevorzugt enthält die Email-Matrix der zweiten Emailschicht Bornitrid. Bevorzugt beträgt in der ersten Emailschicht die Konzentration der Partikel eines oder mehrerer metallischer elektronisch leitfähiger Materialien 44,2 Vol.-% oder weniger, bevorzugt 10,5 bis 39,2 Vol.-% bezogen auf die Summe der Volumina der Email-Matrix (i) und der Partikel (ii) eines oder mehrerer metallischer elektronisch leitfähiger Materialien, besonders bevorzugt 60 Gew.-% oder weniger, bevorzugt 40 bis 55 Gew.-% bezogen auf die Summe der Massen der Email-Matrix (i) und der Partikel (ii) eines oder mehrerer metallischer elektronisch leitfähiger Materialien, und in der zweiten Emailschicht die Konzentration der Partikel eines oder mehrerer metallischer elektronisch leitfähiger Materialien 26,0 Vol.-% oder weniger, bevorzugt 4,2 bis 22,1 Vol,-% bezogen auf die Summe der Volumina der Email-Matrix (i) und der Partikel (ii) eines oder mehrerer metallischer elektronisch leitfähiger Materialien, besonders bevorzugt 40 Gew.-% oder weniger, bevorzugt 20 bis 35 Gew,-% bezogen auf die Summe der Massen der Email-Matrix (i) und der Partikel (ii) eines oder mehrerer metallischer elektronisch leitfähiger Materialien, wobei die Konzentration der Partikel eines oder mehrerer metallischer elektronisch leitfähiger Materialien in der ersten Emailschicht größer ist als die Konzentration der Partikel eines oder mehrerer metallischer elektronisch leitfähigen Materialien in der zweiten Emailschicht.

Besonders bevorzugt werden mehrere oder aller der hier beschriebenen bevorzugten Merkmale miteinander kombiniert.

In einer speziellen für bestimmte Anwendungsfälle besonders bevorzugten Ausführungsform umfasst eine erfindungsgemäße Beschichtung eine unmittelbar auf der Oberfläche des beschichteten Grundkörpers angeordnete erste Schicht sowie eine auf der ersten Schicht angeordnete zweite Schicht, wobei
- die erste Schicht aus einer Email-Zusammensetzung besteht aus (i) einer Email-Matrix mit einer für ein Grundemail geeigneten Zusammensetzung und (ii) in diese Email-Matrix eingebetteten Partikeln aus Edelstahl mit einer Partikelgröße von 38 µm oder kleiner in einer Konzentration im Bereich von 4,2 Vol.-% bis 82,6 Vol.-%, bevorzugt im Bereich von 8,7 bis 67,8 Vol.-%, bezogen auf die Summe der Volumina der Email-Matrix (i) und der Partikel (ii) aus Edelstahl, besonders bevorzugt im Bereich von 20 bis 90 Gew.-%, bevorzugt im Bereich von 35 bis 80 Gew.-%, bezogen auf die Summe der Massen der Email-Matrix (i) und der Partikel (ii) aus Edelstahl, und
- die zweite Schicht aus einer Email-Zusammensetzung besteht aus (i) einer Email-Matrix mit einer für ein Deckemail geeigneten Zusammensetzung, wobei die Email-Matrix Bornitrid umfasst in einer Konzentration von 0,1 bis 33 Gew.-%, bezogen auf die Gesamtmasse der Email-Matrix, und (ii) in diese Email-Matrix eingebetteten Partikeln aus Edelstahl mit einer Partikelgröße von 38 µm oder kleiner in einer Konzentration im Bereich von 3,0 bis 55,2 Vol.-%, bevorzugt 4,2 bis 34,5 Vol.-%, bezogen auf die Summe der Volumina der Email-Matrix (i) und der Partikel (ii) aus Edelstahl. besonders bevorzugt im Bereich von 15 bis 70 Gew.-%, bevorzugt 20 bis 50 Gew.-%, bezogen auf die Summe der Massen der Email-Matrix (i) und der Partikel (ii) aus Edelstahl,
wobei die Konzentration der Partikel eines oder mehrerer metallischer elektronisch leitfähiger Materialien in der ersten Emailschicht größer ist als die Konzentration der Partikel eines oder mehrerer metallischer elektronisch leitfähigen Materialien in der zweiten Emailschicht.

Ein weiterer Aspekt der vorliegenden Erfindung betrifft einen Gegenstand umfassend einen Grundkörper und eine auf der Oberfläche oder einem Teilbereich der Oberfläche des Grundkörpers angeordnete erfindungsgemäße Beschichtung wie oben definiert. Bevorzugt ist die erfindungsgemäße Beschichtung auf einer Stahloberfläche eines Grundkörpers angeordnet.

Der eine erfindungsgemäße Beschichtung (wie oben definiert) aufweisende Gegenstand ist vorzugsweise ausgewählt aus der Gruppe bestehend aus
- Trocken-, Feucht- und Nasselektroabscheider, insbesondere zur Reinigung korrosiver Abgase,
- Apparate und Reaktoren, Rohrleitungen und Einbauteile
- Behälter und Wannen, insbesondere zur Aufbewahrung korrosiver Medien.

In bestimmten Fällen ist es dabei bevorzugt, dass der Gegenstand
- einen Grundkörper aus kohlenstoffhaltigem Stahl umfasst,
   sowie
- eine auf einem ersten Bereich der Oberfläche dieses Grundkörpers angeordnete erfindungsgemäße Beschichtung umfassend oder bestehend aus einer Email-Matrix wie oben definiert, und in die Email-Matrix eingebetteten Partikeln aus Edelstahl, und
- eine auf einem zweiten Bereich der Oberfläche dieses Grundkörpers angeordnete erfindungsgemäße Beschichtung umfassend oder bestehend aus einer Email-Matrix wie oben definiert, und in die Email-Matrix eingebetteten Partikeln aus Edelstahl,
wobei sich der erste Bereich und der zweite Bereich an einander gegenüberliegenden Seiten des Grundkörpers befinden, z. B. Vorder- und Rückseite oder Ober- und Unterseite oder Innen- und Außenseite des Grundkörpers.

Unter "einander gegenüberliegende Seiten" werden hier beispielsweise die Ober- und die Unterseite bzw. die Vorder- und die Rückseite eines flachen Grundkörpers verstanden, oder die Innen- und die Außenseite eines Grundkörpers in Form eines Hohlkörpers.

Erfindungsgemäße Email-Zusammensetzungen, wobei das elektronisch leitfähige Material der in die Email-Matrix eingebetteten Partikel Edelstahl ist, ermöglichen es, Grundkörper aus kohlenstoffhaltigem Stahl beidseitig, d. h. an einander gegenüberliegenden Seitenflächen des Grundkörpers wie z. B. Vorder- und Rückseite, Ober- und Unterseite oder Innen-und Außenseite, zu emaillieren. Bei nicht elektronisch leitfähigen Email-Zusammensetzungen bilden sich bei der beidseitigen Emaillierung eines Werkstücks aus kohlenstoffhaltigem Stahl durch Ausgasen des beim Aufbrennen der Email-Beschichtung im Stahl frei werdenden Wasserstoffs Fischschuppen-artige Abplatzungen der Email-Beschichtung. Daher war es bisher nötig, für Anwendungen, die eine beidseitige Emaillierung erfordern, Grundkörper aus einem entkohlten Stahl einzusetzen.

Bei beidseitiger Beschichtung eines Grundkörpers aus kohlenstoffhaltigem Stahl mit einer erfindungsgemäßen Email-Zusammensetzung, wobei das elektronisch leitfähige Material der in die Email-Matrix eingebetteten Partikel Edelstahl ist, ist dies hingegen nicht der Fall. Es wird derzeit angenommen, dass der freigesetzte Wasserstoff über Diffusionswege, die sich entlang der in die Email-Matrix eingebetteten Edelstahlpartikel ausbilden, abgeführt wird, und/oder in den in unmittelbarer Nachbarschaft zur Oberfläche des Grundkörpers in die Email-Matrix eingebetteten Edelstahlpartikeln gebunden wird, so dass der Wasserstoff-Partialdruck an der Grenzfläche zwischen der Email-Beschichtung und dem Grundkörper aus Stahl reduziert wird.

Eine beidseitige Email-Beschichtung eines Stahlwerkstücks ist z. B. für solche Anwendungen erwünscht, bei denen ein Werkstück beidseitig (z. B. an der Vorder- und an der Rückseite, an der Ober- und der Unterseite, oder an der Innen- und der Außenseite) mit einem korrosiven Medium in Kontakt steht. Dies betrifft zum Beispiel für den Einbau in Behältern, Apparaten und Reaktoren vorgesehene Einbauten wie Stromstörer, Strömungsleitelemente, Rührer, statische Mischer und ähnliche.

Weitere Beispiele sind Rohrbündel- oder Platten-Wärmetauscher für den Wärmeübergang zwischen korrosiven Medien. Diese werden im Stand der Technik meist aufwändig aus korrosionsbeständigen Werkstoffen wie Graphit oder Keramik gefertigt. Erfindungsgemäß werden Rohre für einen Rohrbündel-Wärmeaustauscher aus kohlenstoffhaltigem Stahl gefertigt, und sowohl an der Innen- als auch an der Außenseite mit einer erfindungsgemäßen Email-Zusammensetzung, wobei das elektronisch leitfähige Material der in die Email-Matrix eingebetteten Partikel Edelstahl ist, versehen. Erfindungsgemäß werden Platten für einen Platten-Wärmeaustauscher aus kohlenstoffhaltigem Stahl gefertigt, und sowohl an der Vorder- als auch an der Rückseite mit einer erfindungsgemäßen Email-Zusammensetzung, wobei das elektronisch leitfähige Material der in die Email-Matrix eingebetteten Partikel Edelstahl ist, versehen. Damit ermöglicht es die Erfindung, teurere oder nur mit größerem Aufwand zu bearbeitende Werkstoffe wie Graphit oder Keramik zu ersetzen.

Ein weiterer Aspekt der vorliegenden Erfindung betrifft ein Verfahren zur Herstellung eines erfindungsgemäßen Gegenstands (wie oben definiert). Dieses Verfahren umfasst die Schritte:
(1) Bereitstellen eines Grundkörpers
(2) Bereitstellen einer Mischung umfassend Rohstoffe zur Bildung einer Email-Matrix (i) bei einer Aufbrenntemperatur im Bereich von 600 °C bis 900 °C und (ii) Partikel eines oder mehrerer elektronisch leitfähiger Materialien, die keine Edelmetalle sind, wobei die Partikel (ii)
   - eine Partikelgröße von 700 µm oder kleiner, bevorzugt 300 µm oder kleiner, weiter bevorzugt 150 µm oder kleiner, noch weiter bevorzugt 100 µm oder kleiner, besonders bevorzugt 38 µm oder kleiner aufweisen, erhältlich durch Sieben
   - und ausgewählt sind aus der Gruppe bestehend aus
      (a) Partikeln auf Kohlenstoff basierender elektronisch leitfähiger Materialien,
      (b) Partikeln sonstiger elektronisch leitfähiger Materialien ausgewählt aus der Gruppe der metallischen elektronisch leitfähigen Materialien, die keine Edelmetalle sind,
      (c) Partikeln, die aus einer Kombination auf Kohlenstoff basierender elektronisch leitfähiger Materialien und sonstiger elektronisch leitfähiger Materialien ausgewählt aus der Gruppe der metallischen elektronisch leitfähigen Materialien, die keine Edelmetalle sind, gebildet sind;
         und die Gesamtkonzentration der Partikel (ii) im Bereich von 0,09 Vol.-% bis 67,8 Vol.-%, bevorzugt im Bereich von 0,18 Vol.-% bis 67,8 Vol.-%, weiter bevorzugt im Bereich von 1,9 Vol.-% bis 55,2 Vol.-%, besonders bevorzugt im Bereich von 3,0 Vol.-% bis 44,2 Vol.-% liegt, bezogen auf die Summe der Volumina der Email-Matrix (i) und der Partikel (ii), wobei die Gesamtkonzentration an Partikeln (a) auf Kohlenstoff basierender elektronisch leitfähiger Materialien 48 Vol.-% oder weniger beträgt bezogen auf die Summe der Volumina der Email-Matrix (i) und der Partikel (a),
(3) Auftragen der Mischung auf die Oberfläche oder einen Teilbereich der Oberfläche des Grundkörpers,
(4) Aufbrennen der aufgetragenen Mischung bei einer Temperatur im Bereich von 600 °C bis 900 °C auf die Oberfläche oder den Teilbereich der Oberfläche des Grundkörpers, auf den in Schritt (3) die Mischung aufgetragen worden ist, so dass auf der Oberfläche oder dem Teilbereich der Oberfläche des Grundkörpers, auf den in Schritt (3) die Mischung aufgetragen worden ist, eine Beschichtung umfassend (i) eine Email-Matrix und (ii) in die Email-Matrix eingebettete Partikel eines oder mehrerer elektronisch leitfähiger Materialien gebildet wird,
(5) optional Wiederholen der Schritte (2) bis (4), wobei beim Wiederholen des Schrittes (3) die Mischung auf den Bereich der Oberfläche des Grundkörpers aufgetragen wird, auf der in einem vorausgegangenen Schritt (4) bereits eine Beschichtung gebildet worden ist.

In einer bevorzugten Ausführungsform liegt in Schritt (2) die Gesamtkonzentration der Partikel (ii) im Bereich von 0,5 Gew.-% bis 80 Gew.-%, bevorzugt im Bereich von 1 Gew.-% bis 80 Gew.-%, weiter bevorzugt im Bereich von 10 Gew.-% bis 70 Gew.-%, besonders bevorzugt im Bereich von 15 Gew.-% bis 60 Gew.-% bezogen auf die Summe der Massen der Rohstoffe zur Bildung einer Email-Matrix (i) und der Partikel (ii), wobei die Gesamtkonzentration an Partikeln (a) auf Kohlenstoff basierender elektronisch leitfähiger Materialien 40 Gew.-% oder weniger beträgt bezogen auf die Summe der Massen der Email-Matrix (i) und der Partikel (a).

Durch das Wiederholen der Schritte (2) bis (4), wobei beim Wiederholen des Schrittes (3) die Mischung auf den Bereich der Oberfläche des Grundkörpers aufgetragen wird, auf der in einem vorausgegangenen Schritt (4) bereits eine Beschichtung gebildet worden ist, sind mehrschichtige Email-Beschichtungen erhältlich, z. B. Beschichtungen umfassend eine erste Schicht mit einer Email-Matrix, die ein Grund-Email ist wie oben beschrieben und eine Schicht mit einer Email-Matrix, die ein Deck-Email ist wie oben beschrieben, sowie gegebenenfalls weitere dazwischen liegende Schichten.

Das erfindungsgemäße Verfahren umfasst auch Varianten, wobei
- beim Wiederholen des Schrittes (2) die Zusammensetzung der Mischung variiert wird im Vergleich zu der in dem oder den vorigen Schritten (2) eingesetzten Mischung
   und/oder
- beim Wiederholen des Schrittes (3) die Menge der aufgetragenen Mischung variiert wird im Vergleich zu der Menge der aufgetragenen Mischung in dem oder den vorigen Schritten (3)
   und/oder
- beim Wiederholen des Schrittes (4) die Temperatur des Aufbrennens innerhalb des oben angegebenen Bereichs von 600 °C bis 900 °C variiert wird im Vergleich zu dem oder den vorigen Schritten (4).

Zu bevorzugten Ausgestaltungen erfindungsgemäßer Beschichtungen, die mehrere, jeweils nacheinander aufgetragene und aufgebrannte Emailschichten umfassen, gilt das oben ausgeführte.

Je geringer die Menge der in Schritt (3) aufgetragenen Mischung und je höher die Benetzbarkeit der elektronisch leitfähigen Partikel, desto homogener verteilen sich die eingebetteten Partikel eines oder mehrerer elektronisch leitfähiger Materialien in der Email-Matrix. Daher ist es vorteilhaft, erfindungsgemäße Beschichtungen durch ein Verfahren umfassend mehrfaches Wiederholen der Schritte (2) bis (4) herzustellen, wobei die zur Erreichung der gewünschten Schichtdicke nötige Menge der aufzutragenden Mischung auf die einzelnen Schritte (3) verteilt wird.

Dabei ist es möglich, beim Wiederholen des Schrittes (2) die Zusammensetzung der Mischung dahingehend zu variieren, dass sie keine Partikel eines elektronisch leitfähigen Materials enthält. Im Interesse einer homogenen Verteilung der Partikel eines elektronisch leitfähigen Materials in der Beschichtung ist dies jedoch weniger bevorzugt.

Ein weiterer Aspekt der vorliegenden Erfindung betrifft eine Mischung zur Herstellung einer erfindungsgemäßen Email-Zusammensetzung, einer erfindungsgemäßen Beschichtung bzw. eines erfindungsgemäßen Gegenstands. Diese Mischung umfasst (i) Rohstoffe, die zur Bildung einer Email-Matrix bei einer Aufbrenntemperatur im Bereich von 600 °C bis 900 °C geeignet sind, und (ii) Partikel eines oder mehrerer elektronisch leitfähiger Materialien wie oben definiert, wobei die Partikel eine Partikelgröße von 700 µm oder kleiner, bevorzugt 300 µm oder kleiner, weiter bevorzugt 150 µm oder kleiner, noch weiter bevorzugt 100 µm oder kleiner, besonders bevorzugt 38 µm oder kleiner aufweisen und die Konzentration der Partikel (ii) im Bereich von 0,09 Vol.-% bis 67,8 Vol.-%, bevorzugt im Bereich von 0,18 Vol.-% bis 67,8 Vol.-%, weiter bevorzugt im Bereich von 1,9 Vol.-% bis 55,2 Vol.-%, besonders bevorzugt im Bereich von 3,0 Vol.-% bis 44,2 Vol.-% liegt, bezogen auf die Summe der Volumina der Email-Matrix (i) und der Partikel (ii), wobei die Gesamtkonzentration an Partikeln (a) auf Kohlenstoff basierender elektronisch leitfähiger Materialien 48 Vol.-% oder weniger beträgt bezogen auf die Summe der Volumina der Email-Matrix (i) und der Partikel (a).

Dabei liegt besonders bevorzugt die Konzentration der Partikel (ii) im Bereich von 0,5 Gew.-% bis 80 Gew.-%, bevorzugt im Bereich von 1 Gew.-% bis 80 Gew.-%, weiter bevorzugt im Bereich von 10 Gew.-% bis 70 Gew.-%, besonders bevorzugt im Bereich von 15 Gew.-% bis 60 Gew.-%, bezogen auf die Summe der Massen der Email-Rohstoffe und der Partikel eines oder mehrerer elektronisch leitfähiger Materialien, wobei die Gesamtkonzentration an Partikeln (a) auf Kohlenstoff basierender elektronisch leitfähiger Materialien 40 Gew.-% oder weniger beträgt, bezogen auf die Summe der Massen der Email-Matrix (i) und der Partikel (a).

Dabei ist es für einige Anwendungsfälle bevorzugt, dass die Rohstoffe zur Bildung der Email-Matrix Bornitrid umfassen, denn dadurch wird die Abrasionsbeständigkeit der Email-Beschichtung verbessert. Weiterhin ist es in einigen Anwendungsfällen bevorzugt, dass die Rohstoffe zur Bildung der Email-Matrix gemahlenes Altglas (auch als "Glasmilch" bezeichnet) umfassen, oder sowohl gemahlenes Altglas als auch Bornitrid umfassen. Diese Zusätze sind jedoch für die Herstellung einer erfindungsgemäßen Email-Zusammensetzung nicht zwingend erforderlich.

Die Mischung zur Herstellung einer erfindungsgemäßen Email-Zusammensetzung wird erhalten, indem Rohstoffe, die zur Bildung einer Email-Matrix (i) bei einer Aufbrenntemperatur im Bereich von 600 °C bis 900 °C, geeignet sind, und Partikel (ii) eines oder mehrerer elektronisch leitfähiger Materialien (wie oben definiert) miteinander gemischt werden, wobei die Partikel eine Partikelgröße von 700 µm oder kleiner, bevorzugt 300 µm oder kleiner, weiter bevorzugt 100 µm oder kleiner, besonders bevorzugt 38 µm oder kleiner aufweisen und die Konzentration der Partikel (ii) im Bereich von 0,09 Vol.-% bis 67,8 Vol.-%, bevorzugt im Bereich von 0,18 Vol.-% bis 67,8 Vol.-%, weiter bevorzugt im Bereich von 1,9 Vol.-% bis 55,2 Vol.-%, besonders bevorzugt im Bereich von 3,0 Vol.-% bis 44,2 Vol.-% liegt, bezogen auf die Summe der Volumina der Email-Matrix (i) und der Partikel (ii), wobei die Gesamtkonzentration an Partikeln (a) auf Kohlenstoff basierender elektronisch leitfähiger Materialien 48 Vol.-% oder weniger beträgt bezogen auf die Summe der Volumina der Email-Matrix (i) und der Partikel (a), bevorzugt im Bereich von 0,5 Gew.-% bis 80 Gew.-%, bevorzugt im Bereich von 1 Gew.-% bis 80 Gew.-%, weiter bevorzugt im Bereich von 10 Gew.-% bis 70 Gew.-%, besonders bevorzugt im Bereich von 15 Gew.-% bis 60 Gew.-% liegt, bezogen auf die Summe der Massen der Email-Rohstoffe und der Partikel eines oder mehrerer elektronisch leitfähiger Materialien, wobei die Gesamtkonzentration an Partikeln (a) auf Kohlenstoff basierender elektronisch leitfähiger Materialien 40 Gew.-% oder weniger beträgt bezogen auf die Summe der Massen der Email-Matrix (i) und der Partikel (a).

Die vorliegende Erfindung wird nachstehend anhand von Ausführungsbeispielen beschrieben.

### Ausführungsbeispiele

### 1. Zur Herstellung der Beschichtungen eingesetzte Mischungen

Zur Herstellung erfindungsgemäßer Beschichtungen werden Mischungen eingesetzt enthaltend Rohstoffe zur Herstellung einer Email-Matrix (Dichte 2,28 g/cm³), die typischerweise für Niederschlagselektroden von Elektroabscheidern, aber auch in Reaktoren und Behältern der chemischen Industrie, eingesetzt wird, sowie die in den Tabellen 1 bzw. 2 angegebenen Partikel elektronisch leitfähiger Materialien.

Als metallisches elektronisch leitfähiges Material werden Partikel der Edelstahllegierung 316 L (Dichte jeweils 6,83 g/cm³).mit einer Partikelgröße < 38 µm bzw. Partikel der Edelstahllegierung Cold 100 mit einer Partikelgröße im Bereich von 38 bis 150 µm eingesetzt.

Als auf Kohlenstoff basierendes elektronisch leitfähiges Material werden Graphit-Partikel einer Partikelgröße < 38 µm eingesetzt (Dichte 2,26 g/cm³).

Die Konzentrationsangaben in Gew.-% beziehen sich auf die Gesamtmasse der aufgetragenen Beschichtungsmischung, d. h. die Summe der Massen der eingesetzten Email-Rohstoffe, der Partikel aus Edelstahl 316 L bzw. Cold 100 und gegebenenfalls der Partikel aus Graphit. Die Konzentrationsangaben in Vol.-% beziehen sich auf das Gesamtvolumen der aufgetragenen Beschichtungsmischung, d.h. die Summe der Volumina der eingesetzten Email-Rohstoffe, der Partikel aus Edelstahl 316 L bzw. Cold 100 und gegebenenfalls der Partikel aus Graphit.

Die Volumenanteile der Email-Matrix (i) und der Partikel (ii) werden jeweils pyknometrisch bestimmt.

Probe 8 ist nicht erfindungsgemäß, denn die Konzentration der Graphitpartikel beträgt

bezogen auf die Summe der Massen der Email-Matrix und des Graphits (d. h. ohne Berücksichtigung der Partikel aus Edelstahl) 50 Gew.-% und liegt damit außerhalb des erfindungsgemäßen Bereichs bzw. bezogen auf die Summe der Volumina der Email-Matrix und des Graphits (d.h. ohne Berücksichtigung der Partikel aus Edelstahl) 50,21 Vol.-% und liegt damit außerhalb des erfindungsgemäßen Bereichs.

### 2. Aufbrennen der Beschichtungen

Die oben beschriebenen Beschichtungszusammensetzungen wurden auf einen Grundkörper aus Stahl aufgetragen. Die beschichtete Fläche ist dabei quadratisch und beträgt 100 cm².

Das Aufbrennen der Emailschichten erfolgt bei einer Temperatur im Bereich von 600 °C bis 900 °C und mit einer Brenndauer von 3 bis 6,5 min.

Bei den Proben 3 und 6 wurde zunächst jeweils eine Mischung mit der in Tabelle 1 angegebenen Konzentration an Edelstahlpartikeln aufgetragen und aufgebrannt, und nach erfolgtem Aufbrennprozess wurde nochmals dieselbe Mischung in kleinerer Menge aufgetragen und aufgebrannt. Die Beschichtungen der Proben 3 und 6 umfassen daher jeweils eine erste (substratnahe, d.h. innere) dickere Emailschicht, und eine zweite (substratferne, d.h. äußere) dünnere Emailschicht, wobei in beiden Emailschichten die Konzentration der Edelstahl-Partikel nahezu gleich ist.

Bei Probe 8 (nicht erfindungsgemäß) wurde während des Aufbrennens ein Aufschwimmen von Graphitpartikeln an der Oberfläche der Schmelze beobachtet. Infolgedessen entstand eine Emailschicht mit einer porösen und rauen Oberfläche.

Bei den Proben 9 und 10 wurde zunächst in einem ersten Auftrag eine Mischung mit einer Konzentration an Edelstahl-Partikeln von 50 Gew.-% bezogen auf die Summe der Massen der eingesetzten Email-Rohstoffe und der Edelstahl-Partikel (entspricht 25,02 Vol.-% bezogen auf die Summe der Volumina der eingesetzten Email-Rohstoffe und der Edelstahl-Partikel) aufgetragen, und anschließend in einem zweiten Auftrag eine von Partikeln elektronisch leitfähiger Materialien freie Mischung von Email-Rohstoffen aufgetragen. Dabei wurden bei Probe 9 zunächst die Mischungen für die erste Emailschicht und für die zweite Emailschicht (jeweils wie oben beschrieben) nacheinander aufgetragen und danach aufgebrannt. Bei Probe 10 wurden zunächst die Mischung für die erste Emailschicht (wie oben beschrieben) aufgetragen und aufgebrannt, und danach wurde die Mischung für die zweite Emailschicht (wie oben beschrieben) aufgetragen und aufgebrannt.

Die Beschichtungen der Proben 9 und 10 umfassen daher jeweils eine erste substratnahe (d.h. innere) dickere Emailschicht, in der die Konzentration der Edelstahl-Partikel 50 Gew.-% beträgt bezogen auf die Summe der Massen der eingesetzten Email-Rohstoffe und der Edelstahl-Partikel (entspricht 25,02 Vol.-% bezogen auf die Summe der Volumina der eingesetzten Email-Rohstoffe und der Edelstahl-Partikel) und eine zweite substratferne (d. h. äußere) dünnere Emailschicht, in der die Konzentration der Edelstahl-Partikel 0 Gew.-% (entspricht 0 Vol.-%) beträgt.

Bei den Proben 13 und 14 wurde zunächst jeweils eine Mischung mit der in Tabelle 2 unter "Erster Auftrag" angegebenen Zusammensetzung in der in Tabelle 2 angegebenen Menge aufgetragen und aufgebrannt, und nach erfolgtem Aufbrennprozess wurde eine Mischung mit der in Tabelle 2 unter "Zweiter Auftrag" angegebenen Zusammensetzung in der in Tabelle 2 angegebenen Menge aufgetragen und aufgebrannt. In der für den zweiten Auftrag verwendeten Mischung ist die Konzentration der Edelstahl-Partikel kleiner als in der für den ersten Auftrag verwendeten Mischung. Die Beschichtungen der Proben 13 und 14 umfassen daher jeweils eine erste (substratnahe, d.h. innere) Emailschicht, in der die Konzentration der Edelstahl-Partikel 50 Gew.-% beträgt bezogen auf die Summe der Massen der eingesetzten Email-Rohstoffe und der Edelstahl-Partikel (entspricht 25,02 Vol.-% bezogen auf die Summe der Volumina der eingesetzten Email-Rohstoffe und der Edelstahl-Partikel) und eine zweite (substratferne, d.h. äußere) Emailschicht, in der die Konzentration der Edelstahl-Partikel kleiner ist als 50 Gew.-% bezogen auf die Summe der Massen der eingesetzten Email-Rohstoffe und der Edelstahl-Partikel (kleiner als 25,02 Vol.-% bezogen auf die Summe der Volumina der eingesetzten Email-Rohstoffe und der Edelstahl-Partikel). Die Email-Rohstoffe in der Mischung für den ersten Auftrag haben eine zur Bildung eines Grundemails geeignete Zusammensetzung, während die Email-Rohstoffe in der Mischung für den zweiten Auftrag eine für die Bildung eines Deckemails geeignete Zusammensetzung haben.

### 3. Aufnahme von Strom-Spannungs-Kennlinien

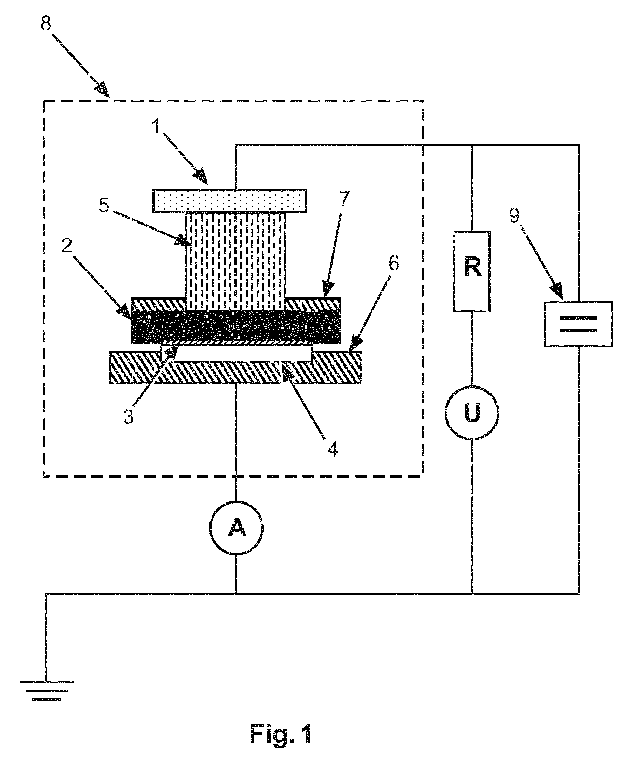

Die Aufnahme von Strom-Spannungs-Kennlinien erfolgte mittels des in Figur 1 dargestellten Prüfstands, der entsprechend der Norm VDE 0303-Teil 30 aufgebaut ist.

Die Oberfläche der HV-Elektrode 1 aus Kupfer liegt direkt auf der Oberfläche des Halbleiterkörpers 5 (Dicke 1 mm) auf, der wiederum auf der Oberfläche des zu untersuchenden Probekörpers 2 aufliegt. Der zu untersuchende Probekörper 2 ist über die Kontaktierung 3 elektrisch mit der HV-Elektrode 4 aus Kupfer verbunden. Die HV-Elektrode 4 weist eine seitliche und rückwärtige Isolierung 6 auf. Durch eine auf der Oberfläche des Probekörpers 2 aufliegende Isolierung 7, in der ein Bereich mit einer Fläche 25 cm² ausgespart ist, wird eine definierte Oberfläche des Probekörpers 2 exponiert. Dieser Versuchsaufbau ist von einer Abschirmung 8 umgeben. Die Spannungsversorgung erfolgte mit einem DC-Generator 9. Der Strom wird mit dem Amperemeter A gemessen.

Die Umgebungsbedingungen (Temperatur und Luftfeuchtigkeit) wurden während der Versuche konstant gehalten, um Messfehler infolge variierender elektrischer Luftdurchgangswiderstände auszuschließen.

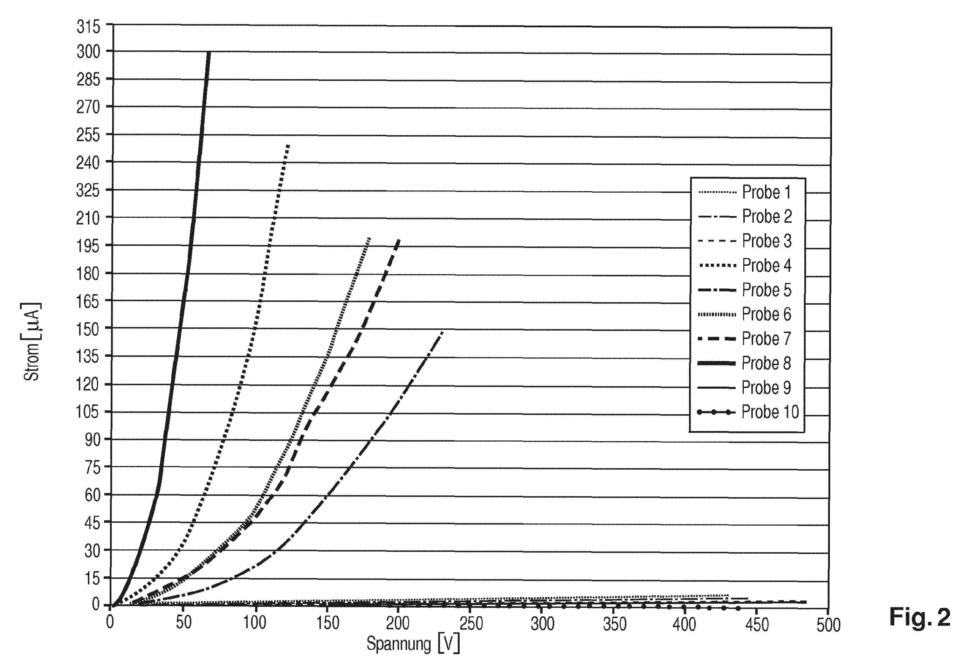

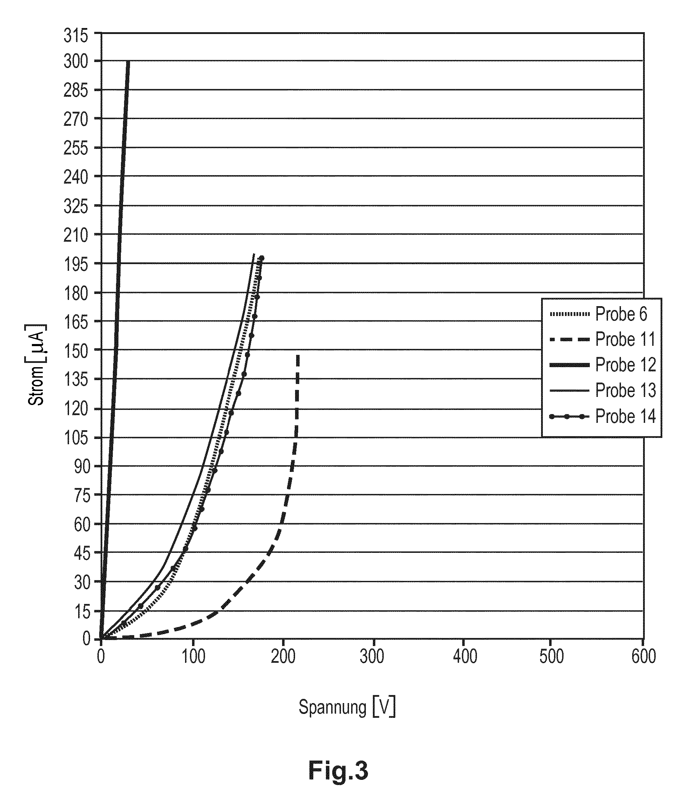

Figur 2 zeigt die Strom-Spannungs-Kennlinien von Proben mit erfindungsgemäßer Email-Beschichtungen (Proben 1-7, 9 und 10) und einer Probe mit einer nicht erfindungsgemäßen Email-Beschichtung (Probe 8). Figur 3 zeigt die Strom-Spannungs-Kennlinien weiterer Proben mit erfindungsgemäßer Email-Beschichtung (Proben 11-14) sowie zum Vergleich nochmals die Strom-Spannungs-Kennlinie der Probe 6.

Im Versuchsaufbau gemäß Figur 1 befindet sich zwischen den Kupferelektroden 1 und 4 eine Reihenschaltung von elektrischen Widerständen (Halbleiterkörper 5 und Probekörper 2), deren Gesamtwiderstand sich aus der Summe der einzelnen Widerstände ergibt. Da die Widerstände der Kupferelektroden vernachlässigbar sind und der Widerstand des Halbleiterkörpers 5 aufgrund seines Materials und seiner Abmessungen definiert ist, ergibt sich der Widerstand des Probekörpers 2 durch Subtraktion des Widerstands des Halbleiterkörpers 5 vom Gesamtwiderstand.

Die Eignung der untersuchten Email-Beschichtungen zur Abführung generierter Ladungsträger ist umso besser, je größer der Anstieg der Strom-Spannungs-Kennlinien ist.

Die Proben 4-7 sowie 11-14 weisen Kennlinien auf, deren Anstieg mit zunehmender Spannung steiler wird. Das heißt, der Widerstand nimmt mit zunehmender Spannung ab, und die Leitfähigkeit nimmt zu. Diese Beschichtungen sind daher in der Lage, auch bei hohen Ladungsträgerkonzentrationen den Abtransport der Ladungsträger zu gewährleisten, und daher zur Beschichtung der Niederschlagselektrode eines Elektrofilters (Elektroabscheiders) geeignet.

Die Proben 1-3, 9 und 10 weisen Kennlinien mit flachem, wenig spannungsabhängigen Anstieg auf. Daher erfüllen sie zwar nicht die hohen Anforderungen für die Beschichtung von Niederschlagselektroden in Elektroabscheidern, sind jedoch für andere Anwendungszwecke (z. B. Apparate und Behälter, siehe oben) geeignet.

Probe 8 (nicht erfindungsgemäß) weist wegen des Aufschwimmens des Graphits beim Aufbrennen eine raue und poröse Oberfläche auf, so dass der Widerstand der Email-Beschichtung gegenüber Korrosion und Abrasion ungenügend ist.

Probe 12 zeichnet sich zwar durch eine besonders hohe Leitfähigkeit aus, weist aber aufgrund der hohen Konzentration großer Edelstahl-Partikel eine relativ raue, und daher möglicherweise poröse und korrosionsanfällige Oberfläche auf. Daher ist es erwünscht, die Oberflächenbeschaffenheit dieser Probe zu verbessern und dabei gleichzeitig den Widerstand so gering wie möglich zu halten.

Aus den Kennlinien der Proben 11 und 13 ist erkennbar, dass der Widerstand der Probe 13 kleiner ist als der der Probe 11. Die Beschichtung der Probe 13 umfasst eine erste (innere) Emailschicht mit einer Konzentration an Edelstahl-Partikeln von 50 Gew.-% (entspricht 25,02 Vol.-%) und eine zweite (äußere) Emailschicht mit einer Konzentration an Edelstahl-Partikeln von 23 Gew.-% (entspricht 9,06 Vol.-%), die Beschichtung der Probe 11 hingegen nur eine einzige Emailschicht mit einer Konzentration an Edelstahl-Partikeln von 23 Gew.-% (entspricht 9,06 Vol.-%), wobei die Dicke dieser einzigen Emailschicht der Probe 11 näherungsweise der Dicke der zweiten Emailschicht der Probe 13 entspricht. Der im Vergleich zu Probe 11 geringere Widerstand der Probe 13 ist überraschend, denn die Beschichtung der Probe 13 ist dicker als die der Probe 11. Außerdem hätte der Fachmann erwartet, dass eine Abfolge von Emailschichten verschiedener Konzentration an Edelstahl-Partikeln sich wie eine Reihenschaltung elektrischer Widerstände verhält, so dass die Emailschicht mit der geringsten Konzentration an Edelstahl-Partikel (d.h. der höchste Widerstand) den Gesamtwiderstand bestimmt.

Aus den Kennlinien der Proben 6, 13 und 14 ist erkennbar, dass der Widerstand der Proben 13 und 14 ähnlich ist wie der der Probe 6. Die Beschichtung der Probe 6 umfasst eine erste (innere) Emailschicht, deren Dicke und Konzentration an Edelstahl-Partikeln identisch ist mit der ersten (inneren) Schicht der Proben 13 und 14, und eine zweite (äußere) Emailschicht, deren Dicke bei identischer Konzentration an Edelstahl-Partikeln nur etwa halb so groß ist wie die Dicke der ersten (inneren) Emailschicht der Probe 6. Die ähnlichen Widerstände der Proben 6, 13 und 14 sind überraschend, denn die Beschichtungen der Proben 13 und 14 sind dicker als die der Probe 6 und weisen in ihrer zweiten (äußeren) Emailschicht eine geringere Konzentration an Edelstahl-Partikeln auf als Probe 6. Der Fachmann hätte erwartet, dass eine Abfolge von Emailschichten verschiedener Konzentration an Edelstahl-Partikeln sich wie eine Reihenschaltung elektrischer Widerstände verhält, so dass die Emailschicht mit der geringsten Konzentration an Edelstahl-Partikeln (d.h. der höchste Widerstand) den Gesamtwiderstand bestimmt.

Dieser überraschende Effekt ermöglicht es, durch Kombination einer inneren Emailschicht mit einer hohen Konzentration an elektronisch leitfähigen Partikeln und einer äußeren Emailschicht mit einer geringeren Konzentration an elektronisch leitfähigen Partikeln gleichzeitig eine hohe elektronische Leitfähigkeit und eine glatte und dichte und somit korrosionsbeständige Oberfläche der Beschichtung zu realisieren.

**Tabelle 1**

| Probe Nr. | 1 | 2 | 3 | 4 | 5 | 6 | 7 | 8 | 9 | 10 |
|---|---|---|---|---|---|---|---|---|---|---|
| Erster Auftrag | | | | | | | | | | |
| Anteil Edelstahllegierung | | | | | | | | | | |
| [Gew.-%] | 23 | 23 | 23 | 50 | 50 | 50 | 22 | 13 | 50 | 50 |
| [Vol.-%] | 9,065 | 9,065 | 9,065 | 25,02 | 25,02 | 25,02 | 8,6 | 4,75 | 25,02 | 25,02 |
| Anteil Graphit / | | | | | | | | | | |
| [Gew.-%] | 0 | 0 | 0 | 0 | 0 | 0 | 4 | 44 | 0 | 0 |
| Vol.-% | | | | | | | 4,03 | 44,21 | | |
| Masse der Email-Rohstoffe /[g] | 6 | 9 | 6 | 6 | 9 | 6 | 6 | 6 | 6 | 6 |

| Zweiter Auftrag | | | | | | | | | | |
|---|---|---|---|---|---|---|---|---|---|---|
| Anteil Edelstahllegierung | - | - | | - | - | | - | - | | |
| [Gew.-%] | | | 23 | | | 50 | | | 0 | 0 |
| [Vol.-%] | | | 9,065 | | | 25,02 | | | | |
| Anteil Graphit /[Gew.-%] | - | - | 0 | - | - | 0 | - | - | 0 | 0 |
| Masse der Email-Rohstoffe /[g] | - | - | 3 | - | - | 3 | - | - | 3 | 3 |

**Tabelle 2**

| Probe Nr. | 11 | 12 | 13 | 14 |
|---|---|---|---|---|
| Erster Auftrag | | | | |
| Anteil Edelstahllegierung 316L | | | | |
| [Gew.-%] | 23 | 50 | 50 | 50 |
| [Vol-%] | 9,065 | 25,02 | 25,02 | 25,02 |
| Masse der Email-Rohstoffe /[g] | 6 | 6 | 6 | 6 |
| Zweiter Auftrag | | | | |
| Anteil Edelstahllegierung | - | - | | |
| [Gew.-%] | | | 23 | 33 |
| [Vol.%] | | | 9,065 | 14,11 |
| Masse der Email-Rohstoffe /[g] | - | - | 6 | 6 |

### 4. Weitere Ausführungsbeispiele

Weitere Ausführungsbeispiele der vorliegenden Erfindung betreffen:
4.1 Elektronisch leitfähige Email-Zusammensetzung bestehend aus oder umfassend
   (i) eine bei einer Temperatur im Bereich von 600 °C bis 900 °C, bevorzugt im Bereich von 600 bis 750 °C, schmelzende Email-Matrix
      und
   (ii) in die Email-Matrix eingebettete Partikel eines oder mehrerer elektronisch leitfähiger Materialien, die keine Edelmetalle sind, wobei die Partikel (ii)
      - eine Partikelgröße von 700 µm oder kleiner, bevorzugt 300 µm oder kleiner, weiter bevorzugt 150 µm oder kleiner, noch weiter bevorzugt 100 µm oder kleiner, besonders bevorzugt 38 µm oder kleiner aufweisen,
      - und ausgewählt sind aus der Gruppe bestehend aus
         (a) Partikeln auf Kohlenstoff basierender elektronisch leitfähiger Materialien,
         (b) Partikeln sonstiger elektronisch leitfähiger Materialien ausgewählt aus der Gruppe der metallischen elektronisch leitfähigen Materialien, die keine Edelmetalle sind,
         (c) Partikeln, die aus einer Kombination auf Kohlenstoff basierender elektronisch leitfähiger Materialien und sonstiger elektronisch leitfähiger Materialien ausgewählt aus der Gruppe der metallischen elektronisch leitfähigen Materialien, die keine Edelmetalle sind, gebildet sind;
         und die Gesamtkonzentration der Partikel (ii) im Bereich von 0,5 Gew.-% bis 80 Gew.-%, bevorzugt im Bereich von 1 Gew.-% bis 80 Gew.-%, weiter bevorzugt im Bereich von 10 Gew.-% bis 70 Gew.-%, besonders bevorzugt im Bereich von 15 Gew.-% bis 60 Gew.-% liegt, bezogen auf die Summe der Massen der Email-Matrix (i) und der Partikel (ii),
         wobei die Gesamtkonzentration an Partikeln (a) auf Kohlenstoff basierender elektronisch leitfähiger Materialien 40 Gew.-% oder weniger beträgt bezogen auf die Summe der Massen der Email-Matrix (i) und der Partikel (a).
4.2 Email-Zusammensetzung nach Beispiel 4.1 dadurch gekennzeichnet, dass das bzw. die auf Kohlenstoff basierenden elektronisch leitfähigen Materialien ausgewählt sind aus der Gruppe bestehend aus Graphit, Graphitexpandat, Glaskohlenstoff, Carbon Black, Ruß und Carbonfasern.
4.3. Email-Zusammensetzung nach einem der Beispiele 4.1 und 4.2, dadurch gekennzeichnet, dass das oder eines, mehrere oder alle der elektronisch leitfähigen Materialien einen Schmelzpunkt im Bereich von 600 °C bis 1800 °C, bevorzugt im Bereich von 600 bis 750 °C, aufweisen.
4.4. Email-Zusammensetzung nach einem der Beispiele 4.1 bis 4.3, dadurch gekennzeichnet, dass die Email-Matrix eine oder mehrere Komponenten umfasst aus der Gruppe bestehend aus Bornitrid und gemahlenem Altglas.
4.5. Email-Zusammensetzung nach einem der der Beispiele 4.1 bis 4.4, dadurch gekennzeichnet, dass die Zusammensetzung bei einer Spannung von 100 V eine elektronische Leitfähigkeit von 1*10⁻¹³ [S/cm] oder mehr, bevorzugt bei einer Spannung von 100 V eine elektronische Leitfähigkeit von 1*10⁻¹² [S/cm] oder mehr, besonders bevorzugt bei einer Spannung von 100 V eine elektronische Leitfähigkeit von 4*10⁻⁸ [S/cm] oder mehr hat, vorzugsweise bei einer Spannung von 40 kV eine elektronische Leitfähigkeit von 1*10⁻⁵ [S/cm] oder mehr, weiter bevorzugt bei einer Spannung von 40 kV eine elektronische Leitfähigkeit von 1*10¹ [S/cm] oder mehr, besonders bevorzugt bei einer Spannung von 40 kV eine elektronische Leitfähigkeit von 1,4*10⁴ [S/cm] oder mehr hat.
4.6. Email-Zusammensetzung nach einem der der Beispiele 4.1 bis 4.5 umfassend
   (i) eine Email-Matrix wie in Beispiel 4.1 oder 4.4 definiert und
   (ii) in diese Email-Matrix eingebettete Partikel einer oder mehrerer Edelstahllegierungen in einer Konzentration von 20 Gew.-% bis 60 Gew.-%, bevorzugt 40 Gew.-% bis 60 Gew.-%, bezogen auf die Summe der Massen der Email-Matrix und der Partikel aus einer Edelstahllegierung
      oder
   (ii) in diese Email-Matrix eingebettete Partikel einer oder mehrerer Edelstahllegierungen und in diese Email-Matrix eingebettete Partikel eines oder mehrerer auf Kohlenstoff basierender elektronisch leitfähiger Materialien, wobei die Gesamtkonzentration der Partikel der Edelstahllegierungen und der Partikel auf Kohlenstoff basierender elektronisch leitfähiger Materialien 20 Gew.-% bis 50 Gew.% beträgt, bezogen auf die Summe der Massen der Email-Matrix, und das Massenverhältnis der Partikel der Edelstahllegierungen zu den Partikeln auf Kohlenstoff basierender elektronisch leitfähiger Materialien im Bereich von 1 : 1 bis 10 : 1, bevorzugt 4:1 bis 6:1 liegt.
4.7. Beschichtung, insbesondere Korrosionsschutzbeschichtung, umfassend oder bestehend aus einer Email-Zusammensetzung nach einem der Beispiele 4.1 bis 4.6
4.8. Beschichtung, insbesondere Korrosionsschutzbeschichtung, nach einem der Beispiele 4.1 bis 4.7, dadurch gekennzeichnet, dass die Beschichtung
   eine Email-Zusammensetzung nach einem der Beispiele 4.1 bis 4.6 in einer auf die Größe der zu beschichtenden Oberfläche bezogenen Menge von 0,01 g/cm² bis 5 g/cm² umfasst oder daraus besteht,
   und/oder
   eine Dicke von 10 µm bis 5000 µm, bevorzugt von 200 µm bis 500 µm, aufweist.
4.9 Gegenstand umfassend
   - einen Grundkörper und
   - eine auf der Oberfläche oder einem Teilbereich der Oberfläche des Grundkörpers angeordnete Beschichtung nach einem der Beispiele 4.7 und 4.8.
4.10 ein Verfahren zum Herstellen eines Gegenstands nach Beispiel 4.9 umfassend die Schritte:
   (1) Bereitstellen eines Grundkörpers
   (2) Bereitstellen einer Mischung umfassend Rohstoffe zur Bildung einer Email-Matrix (i) bei einer Aufbrenntemperatur im Bereich von 600 °C bis 900 °C, bevorzugt im Bereich von 600 bis 750 °C, und (ii) Partikel eines oder mehrerer elektronisch leitfähiger Materialien, die keine Edelmetalle sind, wobei die Partikel (ii)
      - eine Partikelgröße von 700 µm oder kleiner, bevorzugt 300 µm oder kleiner, weiter bevorzugt 150 µm oder kleiner, noch weiter bevorzugt 100 µm oder kleiner, besonders bevorzugt 38 µm oder kleiner aufweisen,
      - und ausgewählt sind aus der Gruppe bestehend aus
         (a) Partikeln auf Kohlenstoff basierender elektronisch leitfähiger Materialien,
         (b) Partikeln sonstiger elektronisch leitfähiger Materialien ausgewählt aus der Gruppe der metallischen elektronisch leitfähigen Materialien, die keine Edelmetalle sind,
         (c) Partikeln, die aus einer Kombination auf Kohlenstoff basierender elektronisch leitfähiger Materialien und sonstiger elektronisch leitfähiger Materialien ausgewählt aus der Gruppe der metallischen elektronisch leitfähigen Materialien, die keine Edelmetalle sind, gebildet sind;
         und die Gesamtkonzentration der Partikel (ii) im Bereich von 0,5 Gew.-% bis 80 Gew.-%, bevorzugt im Bereich von 1 Gew.-% bis 80 Gew.-%, weiter bevorzugt im Bereich von 10 Gew.-% bis 70 Gew.-%, besonders bevorzugt im Bereich von 15 Gew.-% bis 60 Gew.-% liegt, bezogen auf die Summe der Massen der Rohstoffe zur Bildung einer Email-Matrix (i) und der Partikel (ii), wobei die Gesamtkonzentration an Partikeln (a) auf Kohlenstoff basierender elektronisch leitfähiger Materialien 40 Gew.-% oder weniger beträgt bezogen auf die Summe der Massen der Email-Matrix (i) und der Partikel (a).
   (3) Auftragen der Mischung auf die Oberfläche oder einen Teilbereich der Oberfläche des Grundkörpers
   (4) Aufbrennen der aufgetragenen Mischung bei einer Temperatur im Bereich von 600 °C bis 900 °C, bevorzugt im Bereich von 600 bis 750 °C, auf die Oberfläche oder den Teilbereich der Oberfläche des Grundkörpers, auf den in Schritt (3) die Mischung aufgetragen worden ist, so dass auf der Oberfläche oder dem Teilbereich der Oberfläche des Grundkörpers, auf den in Schritt (3) die Mischung aufgetragen worden ist, eine Beschichtung umfassend (i) eine Email-Matrix und (ii) in die Email-Matrix eingebettete Partikel eines oder mehrerer elektronisch leitfähiger Materialien gebildet wird,
   (5) optional Wiederholen der Schritte (2) bis (4), wobei beim Wiederholen des Schrittes (3) die Mischung auf den Bereich der Oberfläche des Grundkörpers aufgetragen wird, auf der in einem vorausgegangenen Schritt (4) bereits eine Beschichtung gebildet worden ist.

## Patentansprüche

1. Elektronisch leitfähige Email-Zusammensetzung bestehend aus oder umfassend
(i) eine bei einer Temperatur im Bereich von 600 °C bis 900 °C schmelzende Email-Matrix
und
(ii) in die Email-Matrix eingebettete Partikel eines oder mehrerer elektronisch leitfähiger Materialien, die keine Edelmetalle sind, wobei die Partikel (ii)
- eine Partikelgröße von 700 µm oder kleiner, bevorzugt 300 µm oder kleiner, weiter bevorzugt 150 µm oder kleiner, noch weiter bevorzugt 100 µm oder kleiner, besonders bevorzugt 38 µm oder kleiner aufweisen, erhältlich durch Sieben,
- und ausgewählt sind aus der Gruppe bestehend aus
(a) Partikeln auf Kohlenstoff basierender elektronisch leitfähiger Materialien,
(b) Partikeln sonstiger elektronisch leitfähiger Materialien ausgewählt aus der Gruppe der metallischen elektronisch leitfähigen Materialien, die keine Edelmetalle sind,
(c) Partikeln, die aus einer Kombination auf Kohlenstoff basierender elektronisch leitfähiger Materialien und sonstiger elektronisch leitfähiger Materialien ausgewählt aus der Gruppe der metallischen elektronisch leitfähigen Materialien, die keine Edelmetalle sind, gebildet sind;
und die Gesamtkonzentration der Partikel (ii) im Bereich von 0,09 Vol.-% bis 67.8 Vol.-%, bevorzugt im Bereich von 0,18 Vol.-% bis 67,8 Vol.-%, weiter bevorzugt im Bereich von 1,9 Vol.-% bis 55,2 Vol.-%, besonders bevorzugt im Bereich von 3,0 Vol.-% bis 44,2 Vol.-% liegt, bezogen auf die Summe der Volumina der Email-Matrix (i) und der Partikel (ii), wobei die Gesamtkonzentration an Partikeln (a) auf Kohlenstoff basierender elektronisch leitfähiger Materialien 48 Vol.-% oder weniger beträgt bezogen auf die Summe der Volumina der Email-Matrix (i) und der Partikel (a).

2. Email-Zusammensetzung nach Anspruch 1, **dadurch gekennzeichnet, dass** das bzw. die auf Kohlenstoff basierenden elektronisch leitfähigen Materialien ausgewählt sind aus der Gruppe bestehend aus Graphit, Graphitexpandat, Glaskohlenstoff, Carbon Black, Ruß und Carbonfasern.

3. Email-Zusammensetzung nach einem der vorhergehenden Ansprüche, **dadurch gekennzeichnet, dass** das oder eines, mehrere oder alle der elektronisch leitfähigen Materialien einen Schmelzpunkt im Bereich von 600 °C bis 1800 °C aufweisen.

4. Email-Zusammensetzung nach einem der vorhergehenden Ansprüche, **dadurch gekennzeichnet, dass** die Email-Matrix eine oder mehrere Komponenten umfasst aus der Gruppe bestehend aus Bornitrid und gemahlenem Altglas.

5. Email-Zusammensetzung nach einem der vorhergehenden Ansprüche, **dadurch gekennzeichnet, dass** die Zusammensetzung bei einer Spannung von 100 V eine elektronische Leitfähigkeit von 1*10⁻¹³ [S/cm] oder mehr, bevorzugt bei einer Spannung von 100 V eine elektronische Leitfähigkeit von 1*10⁻¹² [S/cm] oder mehr, besonders bevorzugt bei einer Spannung von 100 V eine elektronische Leitfähigkeit von 4*10⁻⁸ [S/cm] oder mehr hat, vorzugsweise bei einer Spannung von 40 kV eine elektronische Leitfähigkeit von 1*10⁻⁵ [S/cm] oder mehr, weiter bevorzugt bei einer Spannung von 40 kV eine elektronische Leitfähigkeit von 1*10¹ [S/cm] oder mehr, besonders bevorzugt bei einer Spannung von 40 kV eine elektronische Leitfähigkeit von 1,4*10⁴ [S/cm] oder mehr hat.

6. Email-Zusammensetzung nach einem der vorhergehenden Ansprüche umfassend
(i) eine Email-Matrix wie in Anspruch 1 oder 4 definiert und
(ii) in diese Email-Matrix eingebettete Partikel einer oder mehrerer Edelstahllegierungen in einer Konzentration von 4,2 Vol.-% bis 44,2 Vol.-%, bevorzugt 10,5 Vol.-% bis 44,2 Vol.-%, bezogen auf die Summe der Volumina der Email-Matrix (i) und der Partikel (ii) einer oder mehrerer Edelstahllegierungen
oder
( i) eine Email-Matrix wie in Anspruch 1 oder 4 definiert
und
( ii) in diese Email-Matrix eingebettete Partikel einer oder mehrerer Edelstahllegierungen und in diese Email-Matrix eingebettete Partikel eines oder mehrerer auf Kohlenstoff basierender elektronisch leitfähiger Materialien, wobei die Gesamtkonzentration der Partikel der Edelstahllegierungen und der Partikel auf Kohlenstoff basierender elektronisch leitfähiger Materialien 4,2 Vol.-% bis 34,5 Vol.-% beträgt, bezogen auf die Summe der Volumina der Email-Matrix (i) und der Partikel (ii), und das Volumenverhältnis der Partikel der Edelstahllegierungen zu den Partikeln auf Kohlenstoff basierender elektronisch leitfähiger Materialien im Bereich von Bereich von 1 : 1 bis 50 : 1, bevorzugt 4:1 bis 6:1 liegt

7. Beschichtung, insbesondere Korrosionsschutzbeschichtung, umfassend oder bestehend aus einer Email-Zusammensetzung nach einem der Ansprüche 1 bis 6.

8. Beschichtung, insbesondere Korrosionsschutzbeschichtung, nach Anspruch 7, **dadurch gekennzeichnet, dass** die Beschichtung
eine Email-Zusammensetzung nach einem der Ansprüche 1 bis 6 in einer auf die Größe der zu beschichtenden Oberfläche bezogenen Menge von 0,01 g/cm² bis 5 g/cm² umfasst oder daraus besteht,
und/oder
eine Dicke von 10 µm bis 5000 µm, bevorzugt von 200 µm bis 500 µm, aufweist.

9. Gegenstand umfassend
- einen Grundkörper und
- eine auf der Oberfläche oder einem Teilbereich der Oberfläche des Grundkörpers angeordnete Beschichtung nach einem der Ansprüche 7 und 8.

10. Verfahren zum Herstellen eines Gegenstands nach Anspruch 9 umfassend die Schritte:
(1) Bereitstellen eines Grundkörpers
(2) Bereitstellen einer Mischung umfassend Rohstoffe zur Bildung einer Email-Matrix (i) bei einer Aufbrenntemperatur im Bereich von 600 °C bis 900 °C und (ii) Partikel eines oder mehrerer elektronisch leitfähiger Materialien, die keine Edelmetalle sind, wobei die Partikel (ii)
- eine Partikelgröße von 700 µm oder kleiner, bevorzugt 300 µm oder kleiner, weiter bevorzugt 150 µm oder kleiner, noch weiter bevorzugt 100 µm oder kleiner, besonders bevorzugt 38 µm oder kleiner aufweisen, erhältlich durch Sieben,
- und ausgewählt sind aus der Gruppe bestehend aus
(a) Partikeln auf Kohlenstoff basierender elektronisch leitfähiger Materialien,
(b) Partikeln sonstiger elektronisch leitfähiger Materialien ausgewählt aus der Gruppe der metallischen elektronisch leitfähigen Materialien, die keine Edelmetalle sind,
(c) Partikeln, die aus einer Kombination auf Kohlenstoff basierender elektronisch leitfähiger Materialien und sonstiger elektronisch leitfähiger Materialien ausgewählt aus der Gruppe der metallischen elektronisch leitfähigen Materialien, die keine Edelmetalle sind, gebildet sind;
und die Gesamtkonzentration der Partikel (ii) im Bereich von 0,09 Vol.-% bis 67,8 Vol.-%, bevorzugt im Bereich von 0,18 Vol.-% bis 67,8 Vol.-%, weiter bevorzugt im Bereich von 1,9 Vol.-% bis 55,2 Vol.-%, besonders bevorzugt im Bereich von 3,0 Vol.-% bis 44,2 Vol.-% liegt, bezogen auf die Summe der Volumina der Email-Matrix (i) und der Partikel (ii), wobei die Gesamtkonzentration an Partikeln (a) auf Kohlenstoff basierender elektronisch leitfähiger Materialien 48 Vol.-% oder weniger beträgt bezogen auf die Summe der Volumina der Email-Matrix (i) und der Partikel (a).
(3) Auftragen der Mischung auf die Oberfläche oder einen Teilbereich der Oberfläche des Grundkörpers
(4) Aufbrennen der aufgetragenen Mischung bei einer Temperatur im Bereich von 600 °C bis 900 °C auf die Oberfläche oder den Teilbereich der Oberfläche des Grundkörpers, auf den in Schritt (3) die Mischung aufgetragen worden ist, so dass auf der Oberfläche oder dem Teilbereich der Oberfläche des Grundkörpers, auf den in Schritt (3) die Mischung aufgetragen worden ist, eine Beschichtung umfassend (i) eine Email-Matrix und (ii) in die Email-Matrix eingebettete Partikel eines oder mehrerer elektronisch leitfähiger Materialien gebildet wird,
(5) optional Wiederholen der Schritte (2) bis (4), wobei beim Wiederholen des Schrittes (3) die Mischung auf den Bereich der Oberfläche des Grundkörpers aufgetragen wird, auf der in einem vorausgegangenen Schritt (4) bereits eine Beschichtung gebildet worden ist.

## Claims

1. An electronically conductive enamel composition consisting of or comprising
(i) an enamel matrix melting at a temperature in the range from 600°C to 900°C
and
(ii) particles, embedded in the enamel matrix, of one or more electronically conductive materials, which are not noble metals, wherein the particles (ii)
- have a particle size of 700 µm or smaller, preferably 300 µm or smaller, more preferably 150 µm or smaller, still more preferably 100 µm or smaller, particularly preferably 38 µm or smaller, obtainable by sieving,
- and are selected from the group consisting of
(a) particles of carbon-based electronically conductive materials,
(b) particles of other electronically conductive materials selected from the group of metallic electronically conductive materials, which are not noble metals, and
(c) particles made up of a combination of carbon-based electronically conductive materials and other electronically conductive materials selected from the group of metallic electronically conductive materials, which are not noble metals;
and the total concentration of the particles (ii) is in the range from 0.09 vol.% to 67.8 vol.%, preferably in the range from 0.18 vol.% to 67.8 vol.%, more preferably in the range from 1.9 vol.% to 55.2 vol.%, particularly preferably in the range from 3.0 vol.% to 44.2 vol.%, based on the sum of the volumes of the enamel matrix (i) and the particles (ii), wherein the total concentration of particles (a) of carbon-based electronically conductive materials is 48 vol.% or less, based on the sum of the volumes of the enamel matrix (i) and the particles (a).

2. The enamel composition according to claim 1, **characterised in that** the carbon-based electronically conductive material or materials are selected from the group consisting of graphite, expanded graphite, glass-like carbon, carbon black, soot and carbon fibres.

3. The enamel composition according to one of the preceding claims, **characterised in that** the electronically conductive material or one or more or all of the electronically conductive materials have a melting point in the range from 600°C to 1800°C.

4. The enamel composition according to one of the preceding claims, **characterised in that** the enamel matrix comprises one or more components from the group consisting of boron nitride and ground waste glass.

5. The enamel composition according to one of the preceding claims, **characterised in that** the composition at a voltage of 100 V has an electronic conductivity of 1*10⁻¹³ [S/cm] or more, preferably at a voltage of 100 V has an electronic conductivity of 1*10⁻¹² [S/cm] or more, particularly preferably at a voltage of 100 V has an electronic conductivity of 4*10⁻⁸ [S/cm] or more, and preferably at a voltage of 40 kV has an electronic conductivity of 1*10⁻⁵ [S/cm] or more, more preferably at a voltage of 40 kV has an electronic conductivity of 1*10¹ [S/cm] or more and particularly preferably at a voltage of 40 kV has an electronic conductivity of 1.4*10⁴ [S/cm] or more.

6. The enamel composition according to one of the preceding claims, comprising
(i) an enamel matrix as defined in claim 1 or 4 and
(ii) particles of one or more stainless steel alloys embedded in this enamel matrix in a concentration of 4.2 vol.% to 44.2 vol.%, preferably 10.5 vol.% to 44.2 vol.%, based on the sum of the volumes of the enamel matrix (i) and the particles (ii) of one or more stainless steel alloys
or
( i) an enamel matrix as defined in claim 1 or 4
and
( ii) particles of one or more stainless steel alloys embedded in this enamel matrix and particles of one or more carbon-based electronically conductive materials embedded in this enamel matrix, wherein the total concentration of the particles of the stainless steel alloys and the particles of carbon-based electronically conductive materials is 4.2 vol.% to 34.5 vol.%, based on the sum of the volumes of the enamel matrix (i) and the particles (ii), and the ratio of the volume of the particles of the stainless steel alloys to the particles of carbon-based electronically conductive materials is in the range from 1:1 to 50:1, preferably 4:1 to 6:1.

7. A coating, in particular an anti-corrosive coating, comprising or consisting of an enamel composition according to one of claims 1 to 6.

8. The coating, in particular the anti-corrosive coating, according to claim 7, **characterised in that** the coating
comprises or consists of an enamel composition according to one of claims 1 to 6 in a quantity relative to the size of the surface to be coated of 0.01 g/cm² to 5 g/cm²,
and/or
has a thickness of 10 µm to 5000 µm, preferably of 200 µm to 500 µm.

9. An article comprising
- a base body and
- a coating according to one of claims 7 and 8 disposed on the surface or a portion of the surface of the base body.

10. A method for producing an article according to claim 9 comprising the following steps:
(1) provision of a base body,
(2) provision of a mixture comprising raw materials for the formation of an enamel matrix (i) at a firing temperature in the range from 600°C to 900°C and (ii) particles of one or more electronically conductive materials, which are not noble metals, wherein the particles (ii)
- have a particle size of 700 µm or smaller, preferably 300 µm or smaller, more preferably 150 µm or smaller, still more preferably 100 µm or smaller, particularly preferably 38 µm or smaller, obtainable by sieving,
- and are selected from the group consisting of
(a) particles of carbon-based electronically conductive materials,
(b) particles of other electronically conductive materials selected from the group comprising metallic electronically conductive materials, which are not noble metals, and
(c) particles made up of a combination of carbon-based electronically conductive materials and other electronically conductive materials selected from the group of metallic electronically conductive materials, which are not noble metals;
and the total concentration of the particles (ii) is in the range from 0.09 vol.% to 67.8 vol.%, preferably in the range from 0.18 vol.% to 67.8 vol.%, more preferably in the range from 1.9 vol.% to 55.2 vol.%, particularly preferably in the range from 3.0 vol.% to 44.2 vol.%, based on the sum of the volumes of the enamel matrix (i) and the particles (ii), wherein the total concentration of particles (a) of carbon-based electronically conductive materials is 48 vol.% or less based on the sum of the volumes of the enamel matrix (i) and the particles (a),
(3) application of the mixture to the surface or a portion of the surface of the base body,
(4) firing of the applied mixture at a temperature in the range from 600°C to 900°C on the surface or portion of the surface of the base body to which the mixture has been applied in step (3), so that on the surface or portion of the surface of the base body to which the mixture has been applied in step (3), a coating comprising (i) an enamel matrix and (ii) particles, embedded in the enamel matrix, of one or more electronically conductive materials is formed,
(5) optional repetition of steps (2) to (4), wherein upon repetition of step (3) the mixture is applied to the area of the surface of the base body on which in a previous step (4) a coating has already been formed.

## Revendications

1. Composition d'émail électroniquement conductrice, constituée de ou comprenant
(i) une matrice d'émail fondant à une température située dans la plage allant de 600 °C à 900 °C,
et
(ii) des particules incorporées dans la matrice d'émail d'un ou de plusieurs matériaux électroniquement conducteurs, qui ne sont pas des métaux nobles, dans laquelle les particules (ii)
- présentent une taille de particules inférieure ou égale à 700 µm, de manière préférée inférieure ou égale à 300 µm, de manière davantage préférée inférieure ou égale à 150 µm, de manière encore plus préférée inférieure ou égale à 100 µm, et de manière particulièrement préférée inférieure ou égale à 38 µm, obtenue par criblage,
- et sont choisies parmi le groupe constitué de
(a) particules de matériaux électroniquement conducteurs à base de carbone,
(b) particules d'autres matériaux électroniquement conducteurs choisis parmi le groupe des matériaux électroniquement conducteurs métalliques, qui ne sont pas des métaux nobles,
(c) particules qui sont formées à partir d'une combinaison de matériaux électroniquement conducteurs à base de carbone et d'autres matériaux électroniquement conducteurs choisis parmi le groupe des matériaux électroniquement conducteurs métalliques, qui ne sont pas des métaux nobles ;
et la concentration totale des particules (ii) se trouve dans la plage allant de 0,09 % en volume à 67,8 % en volume, de manière préférée dans la plage allant de 0,18 % en volume à 67,8 % en volume, de manière davantage préférée dans la plage allant de 1,9 % en volume à 55,2 % en volume, de manière particulièrement préférée dans la plage allant de 3,0 % en volume à 44,2 % en volume, par rapport à la somme des volumes de la matrice d'émail (i) et des particules (ii), dans laquelle la concentration totale des particules (a) de matériaux électroniquement conducteurs à base de carbone est égale ou inférieure à 48 % en volume par rapport à la somme des volumes de la matrice d'émail (i) et des particules (a).

2. Composition d'émail selon la revendication 1, **caractérisée en ce que** les matériaux électroniquement conducteurs à base de carbone sont choisis parmi le groupe constitué de graphite, de graphite expansé, de carbone vitreux, de noir de carbone, de suie et de fibres de carbone.

3. Composition d'émail selon l'une quelconque des revendications précédentes, **caractérisée en ce que** le matériau électroniquement conducteur ou un matériau électroniquement conducteur ou plusieurs matériaux électroniquement conducteurs présentent un point de fusion situé dans la plage allant de 600 °C à 1 800 °C.

4. Composition d'émail selon l'une quelconque des revendications précédentes, **caractérisée en ce que** la matrice d'émail comprend un ou plusieurs composants issus du groupe constitué de nitrure de bore ou d'un verre usagé broyé.

5. Composition d'émail selon l'une quelconque des revendications précédentes, **caractérisée en ce que** la composition présente, en présence d'une tension de 100 V, une conductivité électronique supérieure ou égale à 1*10⁻¹³ [S/cm], de manière préférée en présence d'une tension de 100 V, une conductivité électronique supérieure ou égale à 1*10⁻¹² [S/cm], de manière particulièrement préférée en présence d'une tension de 100 V, une conductivité électronique supérieure ou égale à 4*10⁻⁸ [S/cm], de préférence en présence d'une tension de 40 kV une conductivité électronique supérieure ou égale à 1*10⁻⁵ [S/cm], de manière davantage préférée en présence d'une tension de 40 kV une conductivité électronique supérieure ou égale à 1*10¹ [S/cm], de manière particulièrement préférée en présence d'une tension de 40 kV une conductivité électronique supérieure ou égale à 1,4*10⁴ [S/cm].

6. Composition d'émail selon l'une quelconque des revendications précédentes, comprenant
(i) une matrice d'émail telle que définie dans la revendication 1 ou 4, et
(ii) des particules incorporées dans ladite matrice d'émail d'un ou de plusieurs alliages d'acier inoxydable en une concentration allant de 4,2 % en volume à 44,2 % en volume, de manière préférée allant de 10,5 % en volume à 44,2 % en volume, par rapport à la somme des volumes de la matrice d'émail (i) et des particules (ii) d'un ou de plusieurs alliages d'acier inoxydable
ou
( i) une matrice d'émail telle que définie dans la revendication 1 ou 4,
et
( ii) des particules, incorporées dans ladite matrice d'émail, d'un ou de plusieurs alliages d'acier inoxydable et des particules, incorporées dans ladite matrice d'émail, d'un ou de plusieurs matériaux électroniquement conducteurs à base de carbone, dans laquelle la concentration totale des particules des alliages d'acier inoxydable et des particules de matériaux électroniquement conducteurs à base de carbone va de 4,2 % en volume à 34,5 % en volume, par rapport à la somme des volumes de la matrice d'émail (i) et des particules (ii), et le rapport de volume entre les particules des alliages d'acier inoxydable et les particules des matériaux électroniquement conducteurs à base de carbone est situé dans la plage allant de 1:1 à 50:1, de manière préférée allant de 4:1 à 6:1.

7. Revêtement, en particulier revêtement anti-corrosion, comprenant ou constitué d'une composition d'émail selon l'une quelconque des revendications 1 à 6.

8. Composition, en particulier revêtement anti-corrosion, selon la revendication 7, **caractérisée en ce que** le revêtement
comprend une composition d'émail selon l'une quelconque des revendications 1 à 6 en une quantité, se rapportant à la taille de la surface à revêtir, allant de 0,01 g/cm² à 5 g/cm² ou en est constitué
et/ou
présente une épaisseur allant de 10 µm à 5 000 µm, de manière préférée allant de 200 µm à 500 µm.

9. Objet comprenant
- un corps de base et
- un revêtement disposé sur la surface ou une zone partielle de la surface du corps de base selon l'une quelconque des revendications 7 et 8.

10. Procédé servant à fabriquer un objet selon la revendication 9, comprenant les étapes suivantes consistant à :
(1) fournir un corps de base ;
(2) fournir un mélange comprenant des matières brutes servant à former une matrice d'émail (i) à une température de cuisson située dans la plage allant de 600 °C à 900 °C et (ii) des particules d'un ou de plusieurs matériaux électroniquement conducteurs qui ne sont pas des métaux nobles, dans lequel les particules (ii)
- présentent une taille de particules inférieure ou égale à 700 µm, de manière préférée inférieure ou égale à 300 µm, de manière davantage préférée inférieure ou égale à 150 µm, de manière encore plus préférée inférieure ou égale à 100 µm, et de manière particulièrement préférée inférieure ou égale à 38 µm, obtenue par criblage,
- et sont choisies parmi le groupe constitué de
(a) particules de matériaux électroniquement conducteurs à base de carbone,
(b) particules d'autres matériaux électroniquement conducteurs choisis parmi le groupe des matériaux électroniquement conducteurs métalliques, qui ne sont pas des métaux nobles,
(c) particules qui sont formées à partir d'une combinaison de matériaux électroniquement conducteurs à base de carbone et d'autres matériaux électroniquement conducteurs choisis parmi le groupe des matériaux électroniquement conducteurs métalliques, qui ne sont pas des métaux nobles,
et la concentration totale des particules (ii) se trouve dans la plage allant de 0,09 % en volume à 67,8 % en volume, de manière préférée dans la plage allant de 0,18 % en volume à 67,8 % en volume, de manière davantage préférée dans la plage allant de 1,9 % en volume à 55,2 % en volume, de manière particulièrement préférée dans la plage allant de 3,0 % en volume à 44,2 % en volume, par rapport à la somme des volumes de la matrice d'émail (i) et des particules (ii), dans lequel la concentration totale des particules (a) de matériaux électroniquement conducteurs à base de carbone est égale ou inférieure à 48 % en volume par rapport à la somme des volumes de la matrice d'émail (i) et des particules (a) ;
(3) appliquer le mélange sur la surface ou sur une zone partielle de la surface du corps de base ;
(4) faire cuire le mélange appliqué à une température située dans la plage allant de 600 °C à 900 °C sur la surface ou la zone partielle de la surface du corps de base, sur lequel le mélange a été appliqué lors de l'étape (3) de sorte qu'un revêtement comprenant (i) une matrice d'émail et (ii) des particules, incorporées dans la matrice d'émail, d'un ou de plusieurs matériaux électroniquement conducteurs est formé sur la surface ou la zone partielle de la surface du corps de base, sur lequel le mélange a été appliqué lors de l'étape (3) ;
(5) en option répéter les étapes (2) à (4), dans lequel en cas de répétition de l'étape (3), le mélange est appliqué sur la zone de surface du corps de base, sur lequel un revêtement a déjà été formé lors d'une étape (4) précédente.
